# EUROPÄISCHE PATENTSCHRIFT

(11) **EP 3 251 302 B1**
(45) Veröffentlichungstag und Bekanntmachung des Hinweises auf die Patenterteilung: **17.06.2020**
(21) Anmeldenummer: 15807639.8
(22) Anmeldetag: 07.12.2015
(51) Int. Cl.: H04L 12/40

(54) **GERÄTEZUGRIFF MITTELS EINES GENERISCHEN KOMMUNIKATIONSTREIBERS**
DEVICE ACCESS VIA A GENERIC COMMUNICATION DRIVER
DISPOSITIF ACCÈS VIA UN PILOTE DE COMMUNICATION GÉNÉRIQUE

(30) Priorität: 26.01.2015 DE 102015101057
(43) Veröffentlichungstag der Anmeldung: 06.12.2017
(73) Patentinhaber: Endress+Hauser Process Solutions AG, 4153 Reinach (CH)
(72) Erfinder: SOTRIFFER, Ingomar, 79588 Efringen-Kirchen (DE); LUBER, Werner, 4123 Allschwil (CH); MAYER, Michael, 4104 Oberwil (CH)
(74) Vertreter: Andres, Angelika Maria
(86) Internationale Anmeldenummer: PCT/EP2015/078813
(87) Internationale Veröffentlichungsnummer: WO 2016/119956

(56) Entgegenhaltungen:
- US-A1- 2008 273 486
- 2: "FDT Interface Specification 1.2.1", , 1. Januar 2005 (2005-01-01), XP055253201, Gefunden im Internet: URL:http://www.fdtgroup.org/sites/default/ files/pages/fdt_specification_v1.2.1.zip [gefunden am 2016-02-25]

## Beschreibung

Die Erfindung betrifft ein Datenübertragungssystem für einen Datenaustausch zwischen einem Feldbussystem und einer Gerätezugriffssoftware, ein Kopplergerät für ein Feldbussystem und einen generischen Kommunikationstreiber für eine Gerätezugriffssoftware. Des Weiteren betrifft die Erfindung ein Verfahren zum Datenaustausch zwischen einem Feldbussystem und einer Gerätezugriffssoftware.

In der Automatisierungstechnik werden vielfach Feldgeräte eingesetzt, die zur Erfassung und/oder Beeinflussung von Prozessvariablen dienen. Beispiele für derartige Feldgeräte sind Füllstandsmessgeräte, Massedurchflussmessgeräte, Druck- und Temperaturmessgeräte etc., die als Sensoren die entsprechenden Prozessvariablen Füllstand, Durchfluss, Druck bzw. Temperatur erfassen.

Die Parametrierung, Konfiguration und Zustandsüberwachung der Feldgeräte eines Feldbussystems erfolgt in der Regel mittels einer auf einem Host installierten Gerätezugriffssoftware. In einer typischen Gerätezugriffssoftware wird die hierarchische Struktur des Feldbussystems mit Hilfe von Gerätetreibern bzw. Gerätebeschreibungsdateien nachgebildet. Die Anordnung der Gerätetreiber bzw. Gerätebeschreibungsdateien entspricht spiegelbildlich der Struktur der Gerätezugriffssoftware. Dies bringt jedoch auch Nachteile mit sich. Wenn beispielsweise ein Gerätetreiber bzw. eine Gerätebeschreibungsdatei für einen Gateway fehlt oder fehlerhaft ist, dann kann auf sämtliche über diesen Gateway erreichbaren Feldgeräte nicht mehr zugegriffen werden.

Es ist daher Aufgabe der Erfindung, eine weniger störanfällige Struktur für die Gerätezugriffssoftware eines Feldbussystems zur Verfügung zu stellen.

Dokumente US 2008/273486 A1 und "FDT Interface Specification 1.2.1", 1. Januar 2005 (2005-01-01) repräsentieren den Stand der Technik.

Gelöst wird diese Aufgabe durch die in den Ansprüchen 1, 9, 10, 12 und 13 angegebenen Merkmale.

Vorteilhafte Weiterentwicklungen der Erfindung sind in den Unteransprüchen angegeben. Ein Datenübertragungssystem entsprechend den Ausführungsformen der Erfindung ist ausgelegt für einen Datenaustausch zwischen einem Feldbussystem, das mindestens ein Feldgerät umfasst, und einer Gerätezugriffssoftware, die auf einem Host installiert ist und mit der auf Komponenten des Feldbussystems zugegriffen werden kann. Das Datenübertragungssystem umfasst ein Kopplergerät, das an das Feldbussystem angeschlossen ist, sowie einen generischen Kommunikationstreiber, der in die Gerätezugriffssoftware eingebunden ist, wobei außerdem mindestens ein Gerätetreiber in die Gerätezugriffssoftware eingebunden ist. Außerdem umfasst das Datenübertragungssystem eine zentrale Datenübertragungsstrecke, die zwischen dem generischen Kommunikationstreiber und dem Kopplergerät aufbaubar ist und über die ein primärer Datenverkehr übertragbar ist.

Der generische Kommunikationstreiber ist dazu ausgelegt, mit mindestens einem der in die Gerätezugriffssoftware eingebundenen Gerätetreiber Daten auszutauschen und von dem mindestens einen Gerätetreiber empfangene Daten als Teil des primären Datenverkehrs über die zentrale Datenübertragungsstrecke zum Kopplergerät zu übermitteln, und Daten des über die zentrale Datenübertragungsstrecke vom Kopplergerät empfangenen primären Datenverkehrs jeweils an denjenigen Gerätetreiber weiterzuleiten, für den die Daten bestimmt sind.

Das Kopplergerät ist dazu ausgelegt, den vom generischen Kommunikationstreiber über die zentrale Datenübertragungsstrecke empfangenen primären Datenverkehr unter Hinzufügung von Routinginformationen in einen sekundären Datenverkehr umzusetzen und auf dem Feldbussystem zu senden, und von mindestens einem der Feldgeräte empfangene Daten in den primären Datenverkehr umzusetzen und über die zentrale Datenübertragungsstrecke zum generischen Kommunikationstreiber zu übermitteln.

Bei dem Datenübertragungssystem entsprechend den Ausführungsformen der vorliegenden Erfindung wird eine neuartige Topologie für den Datenaustausch zwischen einem Feldbussystem und einer Gerätezugriffssoftware verwendet. Auf Seiten der Gerätezugriffssoftware ist eine zentrale Kommunikationskomponente vorgesehen, der generische Kommunikationstreiber, und auf Seiten des Feldbussystems ist ebenfalls eine zentrale Kommunikationskomponente vorgesehen, das Kopplergerät. Zwischen dem generischen Kommunikationstreiber und dem Kopplergerät wird eine zentrale Datenübertragungsstrecke aufgesetzt, über die der gesamte Datenaustausch zwischen der Gerätezugriffssoftware und dem Feldbussystem abgewickelt wird. Der generische Kommunikationstreiber ist außerdem dafür zuständig, innerhalb der Gerätezugriffssoftware den Datenaustausch mit den Gerätetreibern abzuwickeln. Das Kopplergerät ist innerhalb des Feldbussystems für das Routing des Datenverkehrs zum gewünschten Bestimmungsort zuständig. Hierzu erzeugt das Kopplergerät geeignete Routinginformationen, die in den Datenverkehr eingefügt werden. Diese vom Kopplergerät erzeugten Routinginformationen sorgen innerhalb des Feldbussystems für das richtige Routing des Datenverkehrs zum gewünschten Bestimmungsort.

Bei der früher innerhalb der Gerätezugriffssoftware verwendeten hierarchischen Anordnung der Kommunikations- und Gerätetreiber hatte das Fehlen eines Treibers bereits den Ausfall von ganzen Teilsegmenten der Treiberstruktur zur Folge. Dies kann bei der neuartigen zentralisierten Treiberstruktur nicht mehr passieren, denn alle Gerätetreiber kommunizieren direkt mit dem generischen Kommunikationstreiber. Weitere Kommunikationstreiber sind nicht erforderlich. Dadurch wird das Gesamtsystem deutlich weniger störanfällig. Es ist nicht mehr möglich, dass ein fehlender Treiber ganze Teile der Gerätezugriffssoftware lahmlegt. Insbesondere für umfangreiche verschachtelte Feldbustopologien ist dies von Vorteil.

Bei der vorliegenden Datenübertragungssystem wird sämtliche für Datenübertragung, Protokollumsetzung und Routing erforderliche Intelligenz und Rechenleistung in zwei hierfür vorgesehenen Kommunikationskomponenten untergebracht, im generischen Kommunikationstreiber und dem zugeordneten Kopplergerät. Das Kopplergerät ist dabei insbesondere für das Routing innerhalb des Feldbussystems zuständig. Durch diese Bündelung und Zentralisierung der Funktionalitäten wird das System insgesamt übersichtlicher und weniger störanfällig.

Ein weiterer Vorteil ist, dass auf Seiten des Kopplergeräts der ankommende Datenverkehr überwacht und eine Sicherheitsüberprüfung durchgeführt werden kann. Insofern ist die Abwicklung des Datenaustauschs über zwei zentrale Kommunikationskomponenten auch unter Sicherheitsaspekten sinnvoll.

Nachfolgend ist die Erfindung anhand von in der Zeichnung dargestellten Ausführungsbeispielen näher erläutert. Es zeigen:
Fig. 1 ein Feldbussystem sowie die Struktur der Gerätezugriffssoftware gemäß dem Stand der Technik, wobei die Konsequenzen des Fehlens eines geeigneten Gateway-Treibers bzw. Gateway-DTMs (Device Type Managers) veranschaulicht sind;
Fig. 2 eine neuartige Kommunikationsstruktur mit einem generischen Kommunikationstreiber auf Seiten der Gerätezugriffssoftware und einem zugehörigen Kopplergerät auf Seiten des Feldbussystems;
Fig. 3A eine Anfrage, die von dem generischen Kommunikationstreiber an das Kopplergerät gerichtet wird;
Fig. 3B die Übertragung einer Liste sämtlicher Feldgeräte vom Kopplergerät zum generischen Kommunikationstreiber;
Fig. 3C das Aufsetzen von geeigneten Kommunikationskanälen für die Geräte-DTMs auf Seiten des generischen Kommunikationstreibers;
Fig. 3D die Durchführung eines FDT-Scans für jeden der aufgesetzten Kommunikationskanäle;
Fig. 3E die Instantiierung von passenden Geräte-DTMs für die Feldgeräte;
Fig. 4 den Ablauf der Kommunikation zwischen den Geräte-DTMs und den Feldgeräten;
Fig. 5 unterschiedliche Möglichkeiten zur Implementierung einer Datenformatumsetzung zur Umsetzung des primären Datenverkehrs in einen sekundären Datenverkehr;
Fig. 6 ein Feldbussystem, bei dem das Kopplergerät zugleich als Feldzugangsgerät ausgelegt ist.

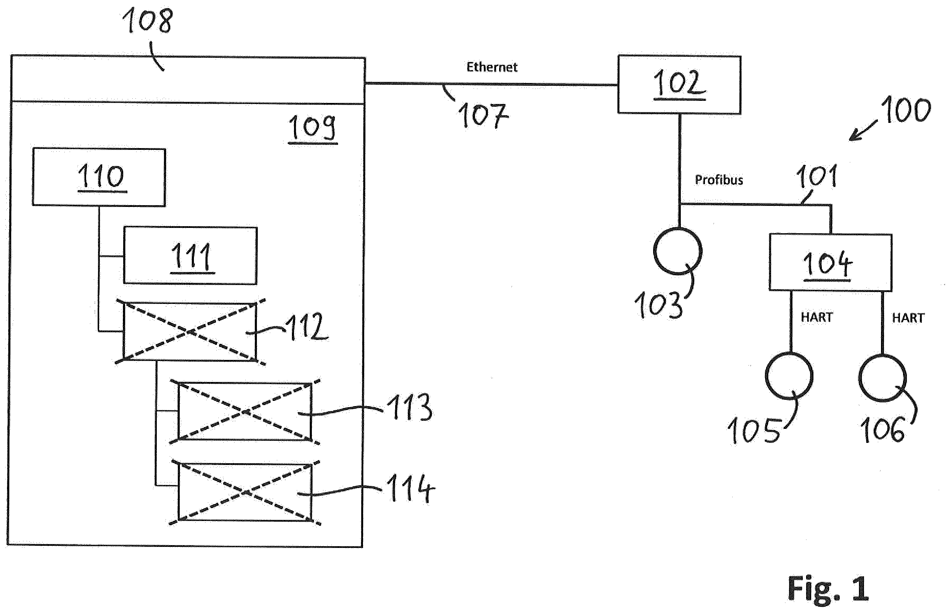

In Fig. 1 ist ein Feldbussystem 100 gezeigt, das mehrere hierarchisch angeordnete Feldbussegmente umfasst. Das Feldbussegment 101 ist entsprechend dem Protokoll Profibus realisiert. An das Feldbussegment 101 sind ein Feldzugangsgerät 102, ein Feldgerät 103 sowie ein Gateway 104 angeschlossen. Unterhalb des Gateways 104 wird das Protokoll HART verwendet. Insbesondere kommunizieren die beiden an dem Gateway 104 angeschlossenen Feldgeräte 105, 106 über das Protokoll HART mit dem Gateway 104. Der Gateway 104 ist dazu ausgelegt, vom Feldbussegment 101 erhaltene Profibus-Pakete in entsprechende HART-Pakete umzuwandeln und in umgekehrter Richtung von den Feldgeräten 105, 106 empfangene HART-Pakete in entsprechende Profibus-Pakete umzuwandeln.

An das Feldzugangsgerät 102 ist über eine Ethernet-Verbindung 107 ein Host 108 angeschlossen, auf dem eine Gerätezugriffssoftware 109 installiert ist. Über die Gerätezugriffssoftware 109 werden vom Host 108 aus die Komponenten des Feldbussystems 100 konfiguriert und parametriert. Insbesondere können von der Gerätezugriffssoftware 109 aus die Parameter der verschiedenen Komponenten des Feldbussystems 100 ausgelesen, dargestellt und verändert werden. Darüber hinaus ermöglicht die Gerätezugriffssoftware 109 eine Zustandsüberwachung (Condition Monitoring) der Komponenten des Feldbussystems 100. Der für diese Aufgaben erforderliche Datenaustausch wird in der Regel über den sogenannten azyklischen Datenverkehr abgewickelt.

Um die verschiedenen Komponenten des Feldbussystems 100 korrekt ansprechen zu können, benötigt die Gerätezugriffssoftware 109 Informationen über die Eigenschaften und Parameter der Feldgeräte, Gateways, Remote I/Os etc. des Feldbussystems 100. Diese Informationen werden von den Herstellern der unterschiedlichen Geräte in der Regel in Form von Gerätebeschreibungsdateien oder Gerätetreibern zur Verfügung gestellt. Zur Gerätebeschreibung für den azyklischen Datenaustausch werden bei den Feldbusprotokollen Profibus-DP, Profibus-PA, Fieldbus Foundation und HART Gerätebeschreibungen gemäß den Standards DD (Device Description), EDD (Enhanced Device Description), DTM (Device Type Manager) sowie FDI Device Packages verwendet. Insbesondere bei den Standards EDD und DTM werden zusätzlich zu Geräteparametern, Gerätefunktionalität und Adressraumbelegung auch Grafikfeatures und grafische Benutzeroberflächen spezifiziert, die die Parametrierung und Konfigurierung des jeweiligen Feldgeräts erleichtern sollen. Zur Erzeugung dieser grafischen Oberflächen sind im Standard EDD spezielle Grafikbefehle vorgesehen, die nach Art einer Interpreter-Sprache abgearbeitet werden.

Im Standard DTM (Device Type Manager) wird eine ausführbare Datei (ein Executable) zur Verfügung gestellt, das auch die genannten Grafikfeatures umfasst. Die verschiedenen DTMs zu den verschiedenen Komponenten des Feldbussystems werden in eine gemeinsame FDT-Rahmenapplikation eingebunden, wobei FDT für "Field Device Tool" steht. Dadurch wird eine gemeinsame Rahmenapplikation zur Verfügung gestellt, in die die DTMs zu verschiedenen Geräten und von unterschiedlichen Herstellern eingebunden werden können.

Der FDT-Standard wird in den nächsten Jahren zunehmend durch den Standard FDI Device Packages ergänzt und später ersetzt.

Neben den bisher diskutierten Feldbusprotokollen Profibus, Fieldbus Foundation und HART gewinnen die sogenannten Industrial Ethernet-Protokolle an Bedeutung, zu denen u.a. die Feldbusprotokolle EtherNet/IP, ProfiNet und EtherCAT gehören.

Beim Feldbusprotokoll EtherNet/IP ist eine Gerätebeschreibungsdatei entsprechend dem Standard EDS (Electronic Data Sheet) zur Beschreibung sowohl des zyklischen als auch des azyklischen Datenaustauschs vorgesehen.

Im Beispiel von Fig. 1 handelt es sich bei der Gerätezugriffssoftware 109 um eine FDT-Rahmenapplikation, in die zur Beschreibung des Feldbussystems 100 eine Anzahl von unterschiedlichen Geräte-DTMs, Gateway-DTMs und Kommunikations-DTMs eingebunden sind. An oberster Stelle der DTM-Hierarchie steht der Kommunikations-DTM 110. Der Kommunikations-DTM 110 ist dem Feldzugangsgerät 102 zugeordnet und kommuniziert mit diesem über die Ethernet-Verbindung 107. Der Kommunikations-DTM 110 stellt in gewisser Weise die Außenschnittstelle der Gerätezugriffssoftware 109 dar. Sämtlicher ein- und ausgehende Datenverkehr wird über den Kommunikations-DTM 110 geführt.

Der Geräte-DTM 111 ist in der DTM-Hierarchie unterhalb des Kommunikations-DTM 110 angeordnet und bildet die Funktionalität des Feldgeräts 103 ab. Da es sich bei dem Feldgerät 103 um ein Profibus-Feldgerät handelt, ist auch der zugehörige Geräte-DTM 111 für das Senden und Empfangen von Profibus-Datenpaketen ausgelegt. Für die Datenübertragung zum Feldgerät 103 sendet der Geräte-DTM 111 daher ein Profibus-Datenpaket zum Kommunikations-DTM 110, der dieses Datenpaket in einen Ethernet-Datenstrom umsetzt und über die Ethernet-Verbindung 107 zum Feldzugangsgerät 102 übermittelt. Dort werden die Ethernet-Daten wieder in das ursprüngliche Profibus-Datenpaket zurückverwandelt, und dieses Profibus-Datenpaket wird zum Feldgerät 103 übertragen. In umgekehrter Richtung, also vom Feldgerät 103 zum zugehörigen Geräte-DTM 111 funktioniert die Datenübertragung entsprechend.

In der Ebene unterhalb des Kommunikations-DTM 110 ist außerdem ein Gateway-DTM 112 angeordnet, der dem Gateway 104 zugeordnet ist. Über den Gateway-DTM 112 kann der Gateway 104 parametriert und konfiguriert werden. Dabei erfolgt die Kommunikation zwischen dem Gateway-DTM 112 und dem Gateway 104 über Profibus-Datenpakete, die für die Übertragung zwischen der Kommunikations-DTM 110 und dem Feldzugangsgerät 102 in einen entsprechenden Ethernet-Datenstrom umgesetzt werden.

Unterhalb des Gateway-DTM 112 in der DTM-Hierarchie sind zwei Geräte-DTMs 113, 114 angeordnet. Der Geräte-DTM 113 bildet die Funktionalität des Feldgeräts 105 ab, und der Geräte-DTM 114 bildet die Funktionalität des Feldgeräts 106 ab. Da es sich bei den beiden Feldgeräten 105, 106 um HART-Feldgeräte handelt, sind auch die beiden Geräte-DTMs 113, 114 für das Protokoll HART ausgelegt.

Wenn der Geräte-DTM 113 beispielsweise Daten zum zugehörigen Feldgerät 105 übermitteln möchte, dann sendet er ein HART-Datenpaket zum Gateway-DTM 112. Der Gateway-DTM 112 bildet auf Seiten der Gerätezugriffssoftware 109 die Funktionalität des Gateway 104 nach. Da der Gateway 104 als Protokollumsetzer zwischen Profibus und HART fungiert, umfasst auch der zugehörige Gateway-DTM 112 diese Protokollwandler-Funktionalität. Der Gateway-DTM 112 wandelt daher das vom Geräte-DTM 113 erhaltene HART-Datenpaket in ein entsprechendes Profibus-Datenpaket um, welches dann zum Kommunikations-DTM 110 übermittelt wird. Der Kommunikations-DTM 110 wandelt das Profibus-Paket in einen entsprechenden Ethernet-Datenstrom um, der über die Ethernet-Verbindung 107 zum Feldzugangsgerät 102 übermittelt wird und dort wieder in das ursprüngliche Profibus-Datenpaket umgewandelt wird. Dieses Profibus-Datenpaket wird dem Gateway 104 zugeführt. Im Gateway 104 wird das Profibus-Datenpaket in ein entsprechendes HART-Datenpaket umwandelt, welches dann dem Feldgerät 105 zugeführt wird.

Wenn in umgekehrter Richtung ein HART-Datenpaket vom Feldgerät 105 zum Geräte-DTM 113 übermittelt werden soll, dann wird dieses HART-Datenpaket zuerst durch den Gateway 104 in ein Profibus-Datenpaket umgesetzt, welches dann durch das Feldzugangsgerät 102 in einen entsprechenden Ethernet-Datenstrom umgewandelt wird, der über die Ethernet-Verbindung 107 zum Kommunikations-DTM 110 übertragen wird. Dort werden die Ethernet-Daten wieder in das ursprüngliche Profibus-Datenpaket zurückverwandelt. Dieses Profibus-Datenpaket wird dann vom Gateway-DTM 112 in ein entsprechendes HART-Datenpaket umgewandelt, das dem Geräte-DTM 113 zugeführt wird.

Aus der obigen Darstellung ergibt sich, dass bei der in Fig. 1 gezeigten Lösung die hierarchische Struktur des Feldbussystems 100 auf Seiten der Gerätezugriffssoftware 109 durch eine entsprechende Anordnung von Kommunikations-DTMs, Gateway-DTMs und Geräte-DTMs spiegelsymmetrisch nachgebildet wird. Die hierarchische Topologie der DTMs entspricht eins zu eins der hierarchischen Topologie des realen physikalischen Feldbussystems. Diese hierarchische Anordnung der Gerätebeschreibungen ist weit verbreitet und hat sich im Markt durchgesetzt. Dennoch fällt auf, dass bereits bei einem relativ einfachen Feldbussystem wie dem in Fig. 1 gezeigten Feldbussystem 100 die zugehörige hierarchische Struktur der DTMs doch vergleichsweise komplex ist. Bei noch umfangreicheren Feldbussystemen, wie sie in der Praxis häufig vorkommen, ergibt sich für die DTMs eine hochkomplizierte hierarchische Struktur mit vielfachen Verschachtelungen, welche auch als "Nested Communication" bezeichnet werden.

Im Folgenden soll ein weiterer Nachteil der in Fig. 1 gezeigten herkömmlichen hierarchischen DTM-Struktur erläutert werden. Es soll angenommen werden, dass der Gateway 104 von einem Dritthersteller stammt, und dass der Dritthersteller keinen geeigneten Gateway-DTM 112 für die FDT-Rahmenapplikation zur Verfügung stellt. Der Grund dafür könnte beispielsweise sein, dass der Dritthersteller in erster Linie auf die Standards DD und EDD setzt und den alternativen Standard FDT/DTM nur in gewissem Maße unterstützt. Denkbar wäre auch, dass es für das Betriebssystem, das auf dem Host 108 installiert ist, keinen passenden Gateway-DTM für den Gateway 104 gibt. Außerdem wäre denkbar, dass der vom Dritthersteller bereitgestellte Gateway-DTM 112 Programmierfehler aufweist und ein Einsatz daher vermieden werden sollte.

Wenn für den Gateway 104 kein geeigneter Gateway-DTM 112 zur Verfügung steht, dann bedeutet dies, dass eine Parametrierung, Konfiguration und Zustandsüberwachung des Gateway 104 von der Gerätezugriffssoftware 109 aus nicht möglich ist. Darüber hinaus bedeutet es jedoch auch, dass auf die beiden an den Gateway 104 angeschlossenen Feldgeräte 105, 106 von der Gerätezugriffssoftware 109 aus nicht zugegriffen werden kann, obwohl auf Seiten der Gerätezugriffssoftware 109 für jedes der beiden Feldgeräte 105, 106 ein passender Geräte-DTM 113, 114 vorhanden ist. Der Grund hierfür ist, dass die beiden Geräte-DTMs 113, 114 den darüber angeordneten Gateway-DTM 112 für einen Zugriff auf die beiden Feldgeräte 105, 106 benötigen. Der Gateway-DTM 112 ist insbesondere für die Protokollumsetzung von HART auf Profibus erforderlich. Wenn der Gateway-DTM 112 fehlt, ist es daher auch für sämtliche in der DTM-Hierarchie darunter angeordneten DTMs nicht mehr möglich, auf die entsprechenden Geräte des Feldbussystems 100 zuzugreifen. Deshalb sind in Fig. 1 neben dem Gateway-DTM 112 auch die beiden darunter angeordneten Geräte-DTMs 113, 114 durchgestrichen.

Dies stellt einen gravierenden Nachteil der in Fig. 1 gezeigten hierarchischen DTM-Struktur des Stands der Technik dar. Wenn ein Gateway-DTM fehlt oder ausfällt, können dadurch auch sämtliche in der DTM-Hierarchie darunter angeordneten DTMs nicht mehr verwendet werden. Eine Parametrierung und Konfiguration der entsprechenden Feldgeräte ist von der Gerätezugriffssoftware 109 aus dann nicht möglich. Insbesondere das Fehlen bzw. der Wegfall eines in der DTM-Hierarchie weit oben angeordneten Gateway-DTMs kann den Ausfall von vielen Geräte-DTMs nach sich ziehen.

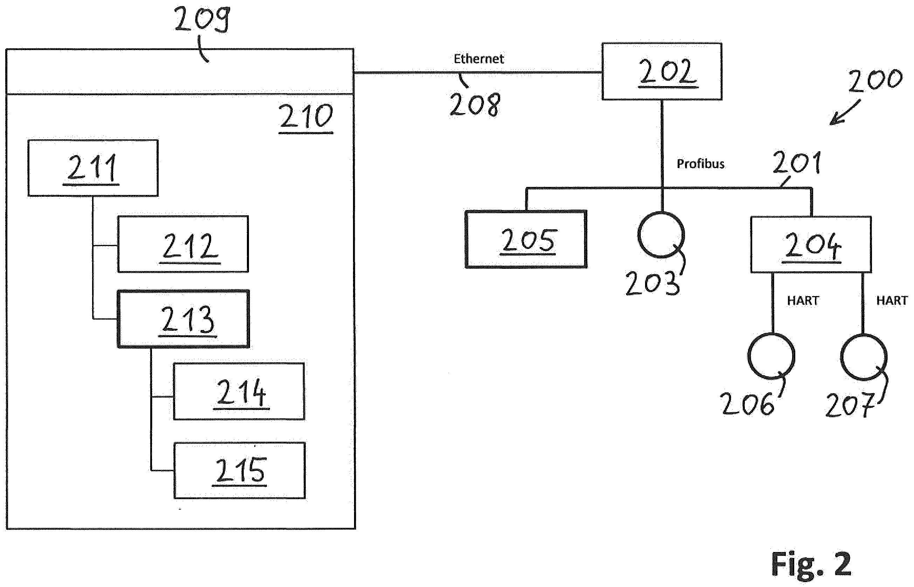

Zur Vermeidung derartiger Nachteile wird eine neuartige Topologie für das Feldbussystem und die zugehörige Gerätezugriffssoftware vorgestellt, die in Fig. 2 veranschaulicht ist.

Das in Fig. 2 gezeigte Feldbussystem 200 umfasst ein Profibus-Segment 201 mit einem Feldzugangsgerät 202, einem Feldgerät 203 sowie einem Gateway 204. Zusätzlich ist an das Profibus-Segment 201 ein Kopplergerät 205 angeschlossen, das für die Ein- und Auskopplung von azyklischem Datenverkehr vorgesehen ist. An den Gateway 204 sind die beiden Feldgeräte 206, 207 angeschlossen, die über das Protokoll HART mit dem Gateway 204 kommunizieren. Der Gateway 204 ist dazu ausgelegt, aus dem Profibus-Segment 201 empfangene Profibus-Datenpakete in entsprechende HART-Datenpakete umzusetzen und umgekehrt.

In dem in Fig. 2 gezeigten Beispiel einer Feldbustopologie werden die beiden Feldbusprotokolle Profibus und HART eingesetzt. Dies ist nur als Beispiel zu verstehen. Es könnten auch andere Feldbusprotokolle sowie verschachtelte Feldbustopologien mit einer Mehrzahl von unterschiedlichen Feldbussegmenten und Feldbusprotokollen verwendet werden.

An das Feldzugangsgerät 202 ist über eine Ethernet-Verbindung 208 ein Host 209 angeschlossen, auf dem eine Gerätezugriffssoftware 210 installiert ist. Über die Gerätezugriffssoftware 210 kann auf die verschiedenen Komponenten des Feldbussystems 200 zugegriffen werden. Insbesondere kann über die Gerätezugriffssoftware 210 eine Parametrierung, Konfiguration sowie eine Zustandsüberwachung der verschiedenen Komponenten des Feldbussystems 200 durchgeführt werden.

In dem in Fig. 2 gezeigten Beispiel handelt es sich bei der Gerätezugriffssoftware 210 um eine FDT-Rahmenapplikation, in die eine Anzahl von verschiedenen DTMs eingebunden ist. An oberster Stelle der DTM-Hierarchie befindet sich der Kommunikations-DTM 211. In der Hierarchieebene unterhalb des Kommunikations-DTM 211 ist der Geräte-DTM 212 angeordnet, der dem Feldgerät 203 zugeordnet ist. Darüber hinaus ist in der Hierarchieebene unterhalb des Kommunikations-DTM 211 ein generischer Kommunikationstreiber 213 angeordnet, der dem neu hinzugefügten Kopplergerät 205 zugeordnet ist. Über den generischen Kommunikationstreiber 213 kann eine Datenverbindung zum Kopplergerät 205 aufgebaut werden, welche dazu verwendet werden kann, einen geeignet formatierten Datenverkehr für den Zugriff auf unterschiedliche Komponenten in das Feldbussystem 200 einzuspeisen und in umgekehrter Richtung Datenverkehr von diesen Komponenten zum generischen Kommunikationstreiber 213 zu übertragen.

Bei dem in Fig. 2 gezeigten Beispiel wird für die Rahmenapplikation der Standard FDT verwendet, wobei die Treiber dem Standard DTM entsprechen. Stattdessen könnten jedoch für die Gerätezugriffssoftware und die darin eingebundenen Treiber bzw. Gerätebeschreibungsdateien auch andere Standards wie beispielsweise DD, EDD, EDS, FDI Device Packages oder andere Standards verwendet werden.

In der Hierarchieebene unterhalb des generischen Kommunikationstreibers 213 sind zwei Geräte-DTMs 214, 215 angeordnet, die den beiden Feldgeräten 206, 207 zugeordnet sind. Für den Gateway 204 ist kein zugehöriger Gateway-DTM vorgesehen. Die Funktionalität, die bei der in Fig. 1 gezeigten Lösung durch den Gateway-DTM 112 bereitgestellt wurde, wird nun durch den generischen Kommunikationstreiber 213 zusammen mit dem Kopplergerät 205 übernommen.

Bei den beiden Feldgeräten 206, 207 handelt es sich um HART-Feldgeräte. Insofern sind auch die beiden zugeordneten Geräte-DTMs 214, 215 für das Protokoll HART ausgelegt. Der Datenaustausch zwischen den Geräte-DTMs 214, 215 und dem generischen Kommunikationstreiber 213 erfolgt daher entsprechend dem Protokoll HART. Der generische Kommunikationstreiber 213 ist dazu ausgelegt, die von den Geräte-DTMs 214, 215 erhaltenen HART-Datenpakete in entsprechende Profibus-Datenpakete umzusetzen und diese Profibus-Datenpakete über die Ethernet-Verbindung 208 zum Kopplergerät 205 zu übertragen. Das Kopplergerät 205 erhält vom generischen Kommunikationstreiber 213 also Profibus-Datenpakete mit darin eingepackten HART-Daten, welche für die Feldgeräte 206, 207 bestimmt sind. Für das Kopplergerät 205 stellt sich nun die Aufgabe, diese Daten in einem geeigneten Datenformat zu den Feldgeräten 206, 207 zu übermitteln. Hierzu nutzt das Kopplergerät 205 Informationen über die Topologie des Feldbussystems 200, welche durch Analysieren des Datenverkehrs im Profibus-Segment 201 erhalten werden. Unter Verwendung dieser Topologieinformationen erzeugt das Kopplergerät 205 ausgehend von dem primären Datenverkehr, den es vom generischen Kommunikationstreiber 213 empfangen hat, unter Hinzufügung geeigneter Routinginformationen einen sekundären Datenverkehr, der in das Profibus-Segment 201 eingespeist wird. Die vom Kopplergerät 205 erzeugten Profibus-Pakete werden vom Gateway 204 in entsprechende HART-Datenpakete umgewandelt und diese HART-Datenpakete werden dann zu demjenigen der Feldgeräte 206, 207 geroutet, für das sie bestimmt sind.

In umgekehrter Richtung werden HART-Datenpakete, die beispielsweise vom Feldgerät 206 erzeugt werden, vom Gateway 204 in entsprechende Profibus-Datenpakete umgesetzt, welche dann vom Kopplergerät 205 empfangen werden. Das Kopplergerät 205 erzeugt aus diesen vom Feldgerät 206 erhaltenen Daten einen entsprechenden primären Datenverkehr, der über die Ethernet-Verbindung 208 zum generischen Kommunikationstreiber 213 übertragen wird. Dort werden die Profibus-Datenpakete in entsprechende HART-Datenpakete umgewandelt und zum Geräte-DTM 214 geroutet, welcher dem Feldgerät 206 zugeordnet ist.

Bei der in Fig. 2 gezeigten Lösung wird zwischen einem generischen Kommunikationstreiber 213, der in die FDT-Rahmenapplikation eingebunden ist, und einem Kopplergerät 205, das Bestandteil des Feldbussystems 200 ist, eine bidirektionale Datenverbindung aufgesetzt. Über das Kopplergerät 205 kann auf sämtliche Feldgeräte zugegriffen werden, die auf gleicher Hierarchieebene wie das Kopplergerät 205 oder in Hierarchieebenen unterhalb des Kopplergeräts 205 angeordnet sind (in Fig. 2 also auf die Feldgeräte 206, 207). Die entsprechenden Geräte-DTMs 214, 215 für diese Feldgeräte 206, 207 werden in der DTM-Hierarchie unmittelbar unterhalb des generischen Kommunikationstreibers 213 instantiiert. Auf einen Gateway-DTM für den Gateway 204 kann dabei verzichtet werden. Das Kopplergerät 205 ist dann dafür zuständig, den vom generischen Kommunikationstreiber 213 erhaltenen primären Datenverkehr unter Hinzufügung von geeigneten Routinginformationen in einen sekundären Datenverkehr umzusetzen und diesen auf dem Profibus-Segment 201 zu senden. Dieser sekundäre Datenverkehr wird dann vom Gateway 204 demjenigen der Feldgeräte 206, 207 zugeleitet, für das die Daten bestimmt sind.

Das Grundkonzept der in Fig. 2 gezeigten Anordnung ist es, anstatt der in Fig. 1 gezeigten hierarchischen DTM-Struktur zwei zentrale Komponenten einzuführen, nämlich einen generischen Kommunikationstreiber 213 auf Seiten der Gerätezugriffssoftware 210 sowie ein in das Feldbussystem 200 eingebundenes Kopplergerät 205, um zwischen diesen beiden zentralen Komponenten einen bidirektionalen primären Datenverkehr aufzusetzen. Auf Seiten des Kopplergeräts 205 ist die Topologie des Feldbussystems 200 bekannt, so dass die von der Gerätezugriffssoftware 210 empfangenen Daten unter Hinzufügung von geeigneter Routinginformation zum jeweiligen Bestimmungsort geroutet werden können.

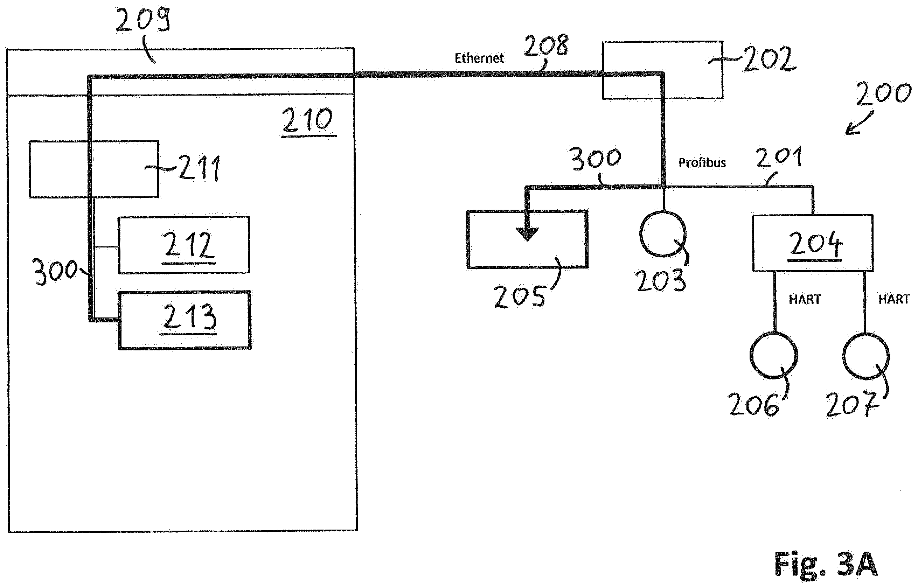

In den Fig. 3A bis 3E ist dargestellt, wie die in Fig. 2 gezeigte Kommunikationsstruktur der Reihe nach aufgesetzt wird. Dabei werden für die einzelnen Komponenten dieselben Bezugszeichen verwendet wie in Fig. 2.

In Fig. 3A ist das Feldbussystem 200 zu erkennen. An das Profibus-Segment 201 ist das Kopplergerät 205 angeschlossen. Außerdem ist in Fig. 3A der Host 209 mit der darauf installierten Gerätezugriffssoftware 210 zu erkennen. Die Gerätezugriffssoftware 210 umfasst anfangs nur den Kommunikations-DTM 211, den Geräte-DTM 212 für das Feldgerät 203 und den generischen Kommunikationstreiber 213, der dem Kopplergerät 205 zugeordnet ist. Darüber hinaus sind noch keine weiteren Geräte-DTMs installiert.

Sobald das Kopplergerät 205 in das Feldbussystem 200 eingebunden ist, beginnt das Kopplergerät 205 mit dem Scannen der Topologie des Feldbussystems 200. Das Kopplergerät 205 analysiert die auf dem Profibus-Segment 201 übertragenen Profibus-Datenpakete und ermittelt anhand von Gerätekennungen, Herstellerkennungen, Geräteversionen, Adressierungs- und Routinginformationen die Topologie des Feldbussystems 200. Auf diese Weise erzeugt das Kopplergerät 205 eine Liste der vorhandenen Feldgeräte und Gateways.

Auf Seiten des generischen Kommunikationstreibers 213 ist noch nicht bekannt, welche Feldgeräte und Gateways im Feldbussystem 200 vorhanden sind. Wie in Fig. 3A gezeigt, sendet der generische Kommunikationstreiber 213 deshalb eine Anfrage an das Kopplergerät 205, um Informationen über die identifizierten Feldgeräte und Gateways abzufragen. Diese Anfrage ist in Fig. 3A als Pfeil 300 eingezeichnet.

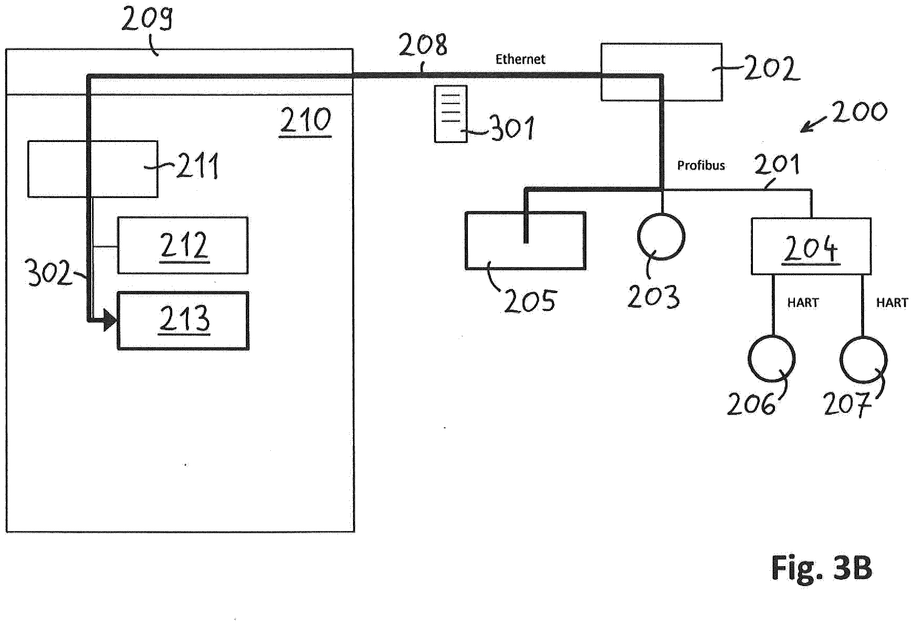

In Fig. 3B ist gezeigt, wie das Kopplergerät 205 auf diese Anfrage hin eine Liste 301 von Feldgeräten und Gateways zum generischen Kommunikationstreiber 213 übermittelt. Die Übertragung der Liste 301 vom Kopplergerät 205 zum generischen Kommunikationstreiber 213 ist in Fig. 3B durch den Pfeil 302 dargestellt. Die Liste 301 umfasst Informationen über die im Feldbussystem vorhandenen Feldgeräte und Gateways sowie über die von diesen Geräten verwendeten Protokolle. Diese Liste 301 steht ab jetzt auch dem generischen Kommunikationstreiber 213 zur Verfügung.

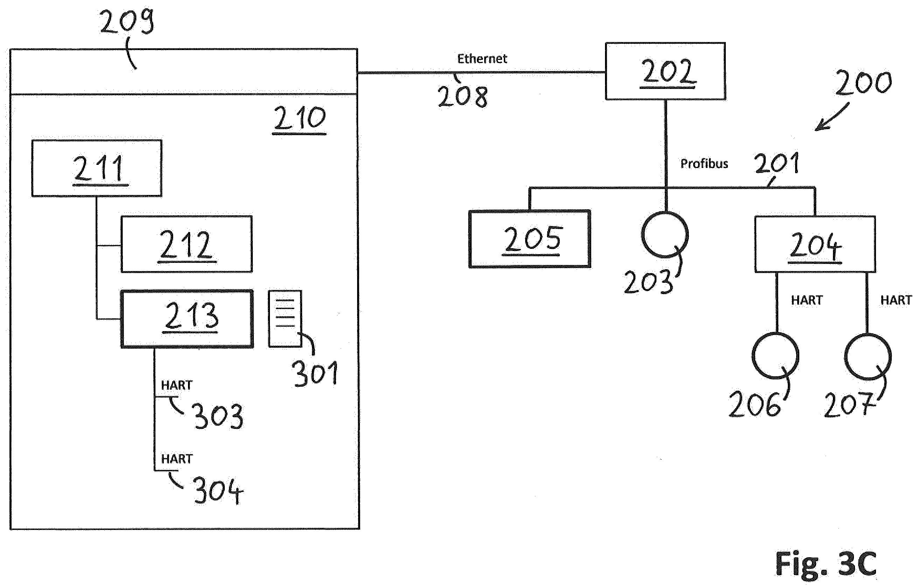

Im nächsten Schritt, der in Fig. 3C gezeigt ist, legt der generische Kommunikationstreiber 213 für jedes in der Liste 301 aufgeführte Feldgerät einen zugehörigen Kommunikationskanal an. Bei dem in den Fig. 3A bis 3E dargestellten Beispiel legt der generische Kommunikationstreiber 213 also zwei HART-Kanäle 303, 304 an, wobei der HART-Kanal 303 für das Feldgerät 206 vorgesehen ist und wobei der HART-Kanal 304 für das Feldgerät 207 vorgesehen ist. Die Kommunikationskanäle 303, 304 werden also jeweils passend zu den von den Feldgeräten 206, 207 verwendeten Protokollen aufgesetzt.

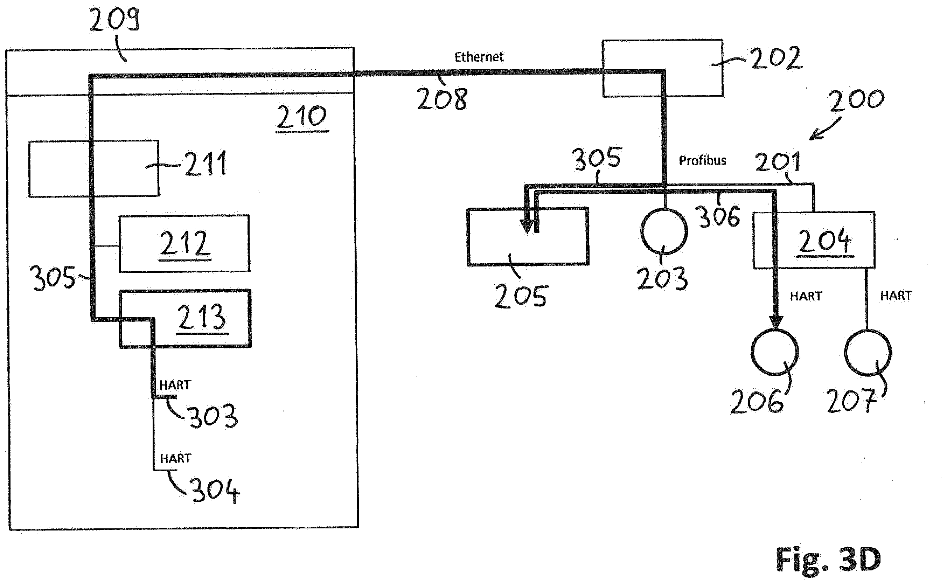

Im nächsten Schritt, der in Fig. 3D veranschaulicht ist, wird von jedem der neu aufgesetzten Kommunikationskanäle 303, 304 aus ein sogenannter FDT-Scan durchgeführt. Mit Hilfe eines FDT-Scans können von einem bestimmten Kommunikationskanal aus Informationen über das zugehörige Feldgerät abgefragt werden. Mit Hilfe eines FDT-Scans kann insbesondere der Gerätetyp, die Version, die Gerätekennung und die Herstellerkennung des zugehörigen Feldgeräts ermittelt werden.

In Fig. 3D ist als Beispiel ein von der FDT-Rahmenapplikation initiierter FDT-Scan für den Kommunikationskanal 303 gezeigt. Die Scananfrage wird entsprechend dem Pfeil 305 über den generischen Kommunikationstreiber 213 zum Kopplergerät 205 übermittelt. Das Kopplergerät 205 leitet die Scananfrage entsprechend dem Pfeil 306 unter Hinzufügung geeigneter Routinginformationen zum Feldgerät 206 weiter, dessen Daten abgefragt werden sollen.

Daraufhin übermittelt das Feldgerät 206 Informationen zum eigenen Gerätetyp und zur Version sowie die eigene Geräte- und Herstellerkennung zum Kopplergerät 205. Das Kopplergerät 205 leitet diese Informationen an den generischen Kommunikationstreiber 213 weiter. Dadurch weiß die FDT-Rahmenapplikation jetzt, welcher Typ von Feldgerät zum Kommunikationskanal 303 gehört.

Für den zweiten Kommunikationskanal 304 wird von der FDT-Rahmenapplikation ein zweiter FDT-Scan initiiert, um Informationen über das zugehörige Feldgerät 207 abzufragen. Aus Gründen der Übersicht ist dieser zweite FDT-Scan in Fig. 3D nicht mit eingezeichnet. Das Feldgerät 207 übermittelt daraufhin die angeforderten Informationen zum generischen Kommunikationstreiber 213. Die FDT-Rahmenapplikation kennt jetzt jeweils den Gerätetyp, die Version, die Gerätekennung und die Herstellerkennung der beiden Feldgeräte 206, 207.

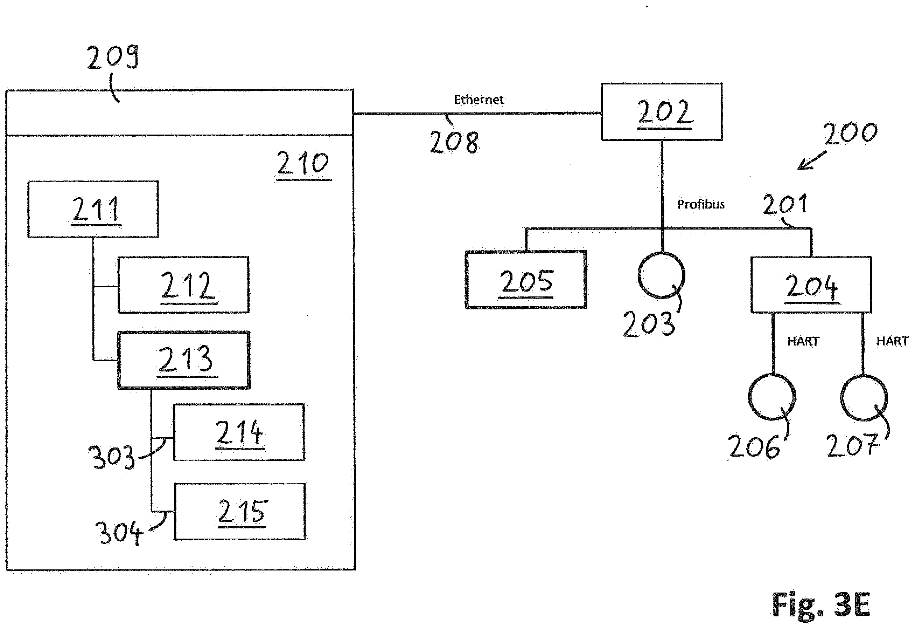

Wie in Fig. 3E gezeigt ist, werden im nächsten Schritt für jeden der beiden Kommunikationskanäle 303, 304 die zu den Feldgeräten 206, 207 passenden Geräte-DTMs 214, 215 instantiiert. Nach erfolgter Instantiierung kann über den Geräte-DTM 214, den Kommunikationskanal 303 und den generischen Kommunikationstreiber 213 auf das Feldgerät 206 zugegriffen werden. Entsprechend kann über den Geräte-DTM 215, den Kommunikationskanal 304 und den generischen Kommunikationstreiber 213 auf das Feldgerät 207 zugegriffen werden. Mit der Instantiierung der beiden Geräte-DTMs 214, 215 ist die Instantiierung der in Fig. 2 gezeigten Kommunikationsstruktur abgeschlossen.

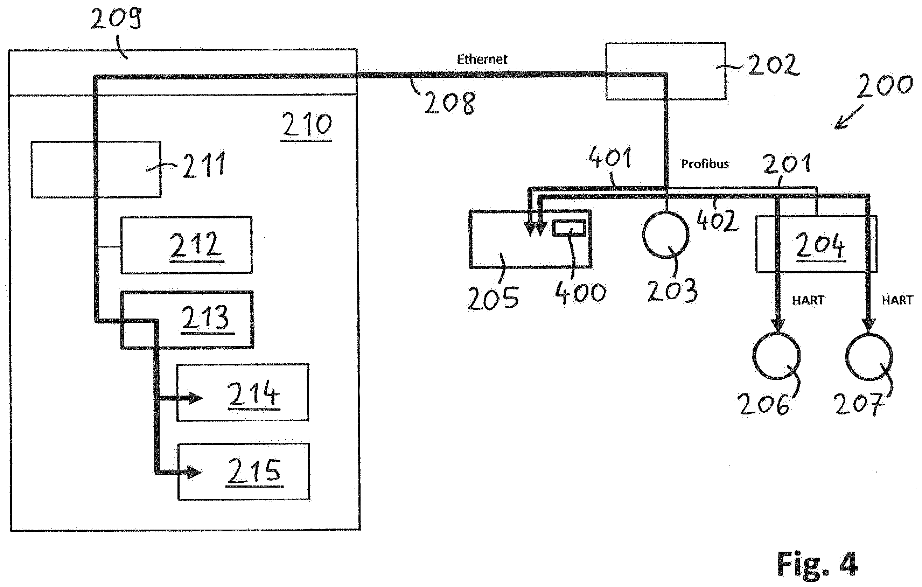

In Fig. 4 ist der Datenfluss in einer entsprechend Fig. 3A bis Fig. 3E aufgesetzten Kommunikationsstruktur im Überblick dargestellt.

Zunächst soll von der Geräte-DTM 214 aus auf Parameter des zugehörigen Feldgeräts 206 zugegriffen werden. Hierzu sendet der Geräte-DTM 214 ein HART-Datenpaket an den generischen Kommunikationstreiber 213, der dieses HART-Datenpaket über den Kommunikationskanal 303 empfängt und in ein entsprechendes Profibus-Datenpaket umwandelt. Dieses Profibus-Datenpaket wird durch den Kommunikations-DTM 211 in einen entsprechenden Ethernet-Datenstrom umgesetzt und über die Ethernet-Verbindung 208 zum Feldzugangsgerät 202 übertragen. Dort werden die Ethernet-Daten wieder in das ursprüngliche Profibus-Datenpaket zurückverwandelt. Dieses Profibus-Datenpaket wird auf dem Profibus-Segment 201 gesendet und zum Kopplergerät 205 übertragen.

Auf Seiten des Kopplergeräts 205 stehen die benötigten Topologieinformationen für das weitere Routing dieses Datenpakets zur Verfügung. Mit Hilfe dieser Topologieinformationen kann das Kopplergerät 205 einen Übertragungspfad für die Übertragung des Datenpakets zum gewünschten Bestimmungsort (also zum Feldgerät 206) aufsetzen. Insbesondere ist auf Seiten des Kopplergeräts 205 bekannt, dass das Datenpaket über den Gateway 204 zum Feldgerät 206 geroutet werden kann, und welche Routinginformationen vom Gateway 204 benötigt werden, um das Datenpaket zum Feldgerät 206 zu routen. Für die gängigsten Gateways im Bereich der Automatisierungstechnik sind auf Seiten des Kopplergeräts 205 Informationen zu den benötigten Datenformaten gespeichert. Zur Umsetzung der Datenpakete umfasst das Kopplergerät 205 einen Datenformatumsetzer 400, der den vom generischen Kommunikationstreiber 213 empfangenen primären Datenverkehr 401 in einen entsprechenden sekundären Datenverkehr 402 umsetzt und dabei die vom Gateway 204 benötigten Routinginformationen in die Profibus-Pakete einfügt. Der sekundäre Datenverkehr 402 wird zum Gateway 204 geroutet, der die Profibus-Datenpakete des sekundären Datenverkehrs 402 in entsprechende HART-Datenpakete umsetzt und diese HART-Datenpakete zum Feldgerät 206 routet.

Es soll nun angenommen werden, dass das Feldgerät 206 auf die Anfrage des Geräte-DTMs 214 antwortet und beispielsweise ein oder mehrere Parameterwerte übermittelt. Hierzu sendet das Feldgerät 206 ein HART-Datenpaket mit den Parameterwerten an den Gateway 204, der dieses HART-Datenpaket in ein entsprechendes Profibus-Datenpaket umwandelt. Das Kopplergerät 205 empfängt dieses Profibus-Datenpaket des sekundären Datenverkehrs 402 und wandelt es mittels des Datenformatumsetzers 400 in ein Profibus-Datenpaket des primären Datenverkehr 401 um. Der primäre Datenverkehr 401 wird dann über das Feldzugangsgerät 202, die Ethernet-Verbindung 208 und den Kommunikations-DTM 211 zum generischen Kommunikationstreiber 213 übertragen. Der generische Kommunikationstreiber 213 wandelt das empfangene Profibus-Datenpaket in ein entsprechendes HART-Datenpaket um und übermittelt dieses HART-Datenpaket über den Kommunikationskanal 303 zum Geräte-DTM 214.

Damit stehen jetzt auf Seiten des Geräte-DTM 214 die benötigten Parameterwerte des Feldgeräts 206 zur Verfügung. Diese Parameterwerte können von der Geräte-DTM 214 beispielsweise auf einer grafischen Benutzeroberfläche angezeigt werden.

Der Datenformatumsetzer 400 ist dazu ausgelegt, den primären Datenverkehr 401 in den sekundären Datenverkehr 402 umzusetzen und dabei geeignete Routinginformationen für den Gateway 204 (oder auch für andere Gateways) einzufügen. Dieser Datenformatumsetzer 400 ist in Fig. 4 in das Kopplergerät 205 integriert. Dies ist eine vorteilhafte Lösung, weil auf Seiten des Kopplergeräts 205 die benötigte Topologieinformation durch Mitlesen des Datenverkehrs einfach beschafft werden kann.

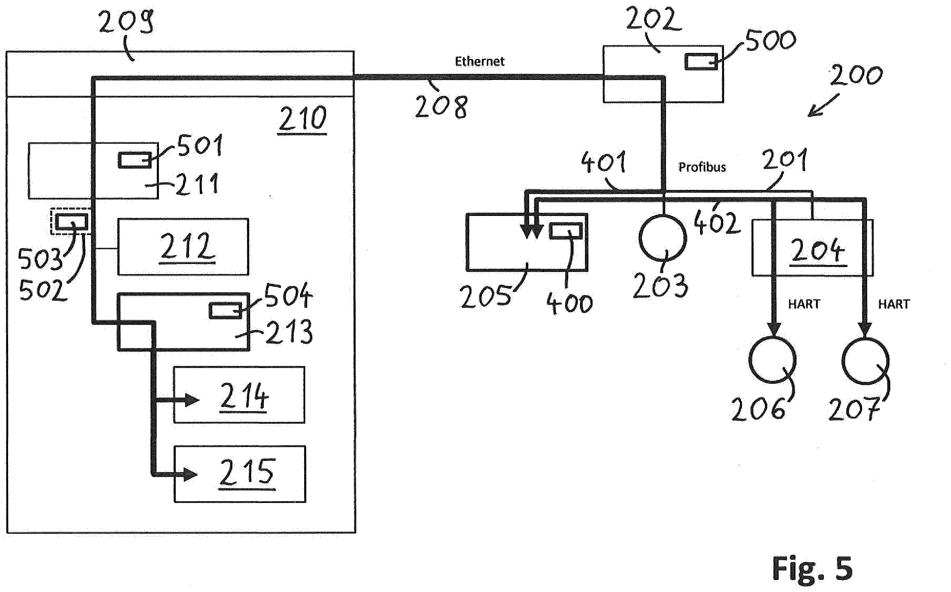

Wie in Fig. 5 dargestellt ist, kann die Datenformatumsetzung vom Kopplergerät 205 weg verlagert und zu anderen Komponenten der Kommunikationsstruktur hin verlagert werden. Beispielsweise könnte anstelle des Datenformatumsetzers 400 ein Datenformatumsetzer 500 auf Seiten des Feldzugangsgeräts 202 vorgesehen werden. In diesem Fall würde die Umwandlung des primären Datenverkehrs in den sekundären Datenverkehr unter Hinzufügung der benötigten Routinginformation bereits auf Seiten des Feldzugangsgeräts 202 erfolgen. Die für die Formatumsetzung benötigten Topologieinformationen können auch vom Feldzugangsgerät 202 aus durch Mitlesen des Datenverkehrs auf dem Profibus-Segment 201 erfasst werden.

Eine weitere Möglichkeit ist, den Datenformatumsetzer als Software zu realisieren und in die Gerätezugriffssoftware 210 auf Seiten des Hosts 209 zu integrieren. Beispielsweise könnte der Datenformatumsetzer 501 für die Umsetzung der Datenpakete und die Hinzufügung der benötigten Routinginformationen in den Kommunikations-DTM 211 integriert werden. In diesem Fall wäre der Kommunikations-DTM 211 dafür zuständig, den primären Datenverkehr in den sekundären Datenverkehr umzusetzen. Um die hierfür benötigten Routinginformationen einfügen zu können, würde der Kommunikations-DTM 211 allerdings Topologieinformationen vom Feldbussystem 200 benötigen, welche beispielsweise in Form einer erweiterten Liste vorab vom Feldbussystem 200 zum Kommunikations-DTM 211 übertragen werden müssten. Die Übersendung einer derartigen um Topologieinformationen ergänzten Liste wäre jedoch problemlos möglich. Damit der Kommunikations-DTM 211 passende Routinginformationen für die Datenpakete erzeugen kann, müssten auf Seiten des Kommunikations-DTM 211 außerdem Informationen zu den Datenformaten der gängigsten Gateways abgelegt sein. Der Kommunikations-DTM 211 würde dann den sekundären Datenverkehr erzeugen und über die Ethernet-Verbindung 208 fertig konfektionierte und mit Routinginformationen versehene Datenpakete zum Feldzugangsgerät 202 übermitteln, das diese Datenpakete dann auf dem Profibus-Segment 201 sendet.

Als weitere Alternative könnte auf Seiten der Gerätezugriffssoftware 210 unterhalb der Kommunikations-DTM 211 ein separates Softwaremodul 502 vorgesehen sein, das einen Datenformatumsetzer 503 umfasst. Dieses Softwaremodul 502 wäre dann dazu ausgelegt, den vom generischen Kommunikationstreiber 213 empfangenen primären Datenverkehr in den entsprechenden sekundären Datenverkehr umzuwandeln, wobei die benötigten Routinginformationen eingefügt werden. Dieser sekundäre Datenverkehr würde dann über den Kommunikations-DTM 211 und die Ethernet-Verbindung 208 zum Feldzugangsgerät 202 übertragen, das diesen sekundären Datenverkehr dann auf dem Profibus-Segment 201 sendet.

Als weitere Alternative wäre es auch denkbar, den Datenformatumsetzer 504 in den generischen Kommunikationstreiber 213 zu integrieren. In diesem Fall würde die Umsetzung vom primären Datenverkehr in den um Routinginformationen ergänzten sekundären Datenverkehr bereits auf Seiten des generischen Kommunikationstreibers 213 erfolgen. Eine Voraussetzung wäre wiederum, dass Topologie-Informationen über das Feldbussystem 200 dem generischen Kommunikationstreiber 213 vorab vom Feldbussystem 200 zur Verfügung gestellt werden. Der generische Kommunikationstreiber 213 würde dann den fertig konfektionierten und mit Routinginformationen versehenen sekundären Datenverkehr über den Kommunikations-DTM 211 und die Ethernet-Verbindung 208 an das Feldzugangsgerät 202 übertragen, und das Feldzugangsgerät 202 würde diesen sekundären Datenverkehr auf dem Profibus-Segment 201 senden.

Bei dem bisher diskutierten Beispiel war das Kopplergerät in der Gerätehierarchie des Feldbussystems irgendwo zwischen dem Feldzugangsgerät und den Feldgeräten angeordnet. Bei dieser Lösung war das Kopplergerät lediglich für das Routing innerhalb eines bestimmten Teilbereichs des Feldbussystems zuständig. Daher kann das Kopplergerät relativ klein ausgeführt sein und benötigt nur wenig Rechenleistung.

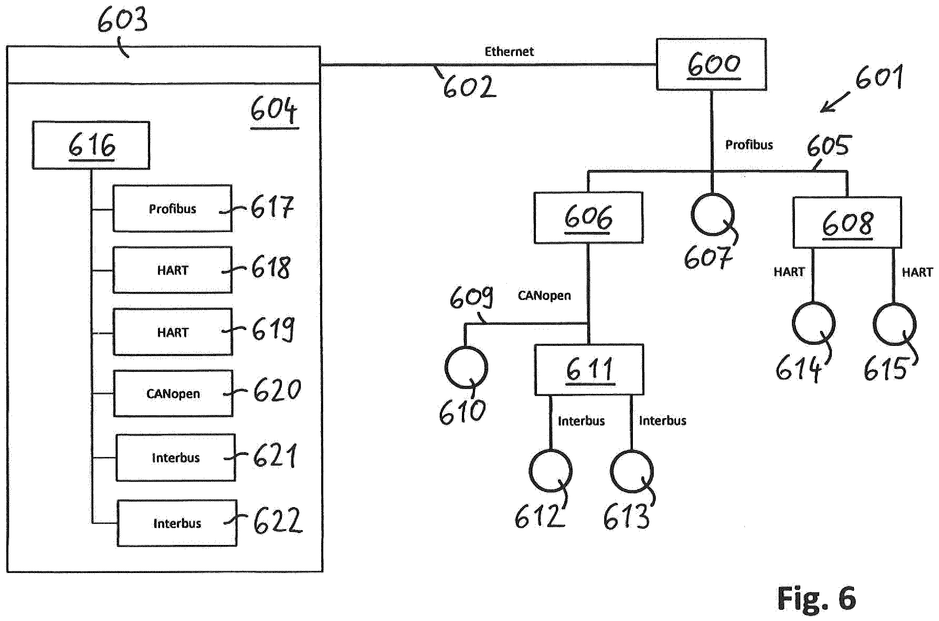

In Fig. 6 ist ein weiteres Beispiel gezeigt, bei dem ein Kopplergerät 600 an oberster Stelle der Gerätehierarchie des Feldbussystems 601 angeordnet ist. Bei dem in Fig. 6 gezeigten Beispiel ist das Kopplergerät 600 daher für das gesamte Routing in dem vergleichsweise komplexen Feldbussystem 601 zuständig.

Über eine Ethernet-Verbindung 602 ist das Kopplergerät 600 mit einem Host 603 verbunden. Auf dem Host 603 ist eine Gerätezugriffssoftware 604 installiert. Von der Gerätezugriffssoftware 604 aus kann zum Zweck der Parametrierung, Konfiguration und Zustandsüberwachung auf die Komponenten des Feldbussystems 601 zugegriffen werden. Das Kopplergerät 600 dient also zugleich als Feldzugangsgerät. Dies hat den Vorteil, dass das Kopplergerät 600 den gesamten Datenverkehr, der in das Feldbussystem 601 eingespeist wird, kontrollieren kann. Ankommende Datenpakete können beispielsweise einer Sicherheitsprüfung unterzogen werden, um Schadsoftware zu erkennen. Außerdem kann bei Zugriffen auf das Feldbussystem 601 die Zugriffsberechtigung und Autorisierung für diesen Zugriff geprüft werden, beispielsweise mit Hilfe von verschiedenen Benutzerkonten.

Das Feldbussystem 601 umfasst ein Profibus-Segment 605, an das das Kopplergerät 600, ein erster Gateway 606 (Hersteller X), ein Profibus-Feldgerät 607 sowie ein zweiter Gateway 608 (Hersteller Y) angeschlossen sind.

Der erste Gateway 606 ist dazu ausgelegt, das Profibus-Protokoll in das Protokoll CANopen umzusetzen. An das CANopen-Segment 609 sind ein CANopen-Feldgerät 610 sowie ein dritter Gateway 611 (Hersteller Z) angeschlossen. Dieser dritte Gateway 611 ist dazu ausgelegt, das Protokoll CANopen in das Protokoll Interbus umzusetzen. An den dritten Gateway 611 (Hersteller Z) sind zwei Interbus-Feldgeräte angeschlossen, nämlich das Interbus-Feldgerät 612 und das Interbus-Feldgerät 613.

Der zweite Gateway 608 (Hersteller Y) ist dazu ausgelegt, das Profibus-Protokoll in das Protokoll HART umzusetzen. An den zweiten Gateway 608 (Hersteller Y) sind zwei HART-Feldgeräte angeschlossen, nämlich das HART-Feldgerät 614 und das HART-Feldgerät 615.

Zur Erfassung der Topologie des Feldbussystems 601 wird vom Kopplergerät 600 aus ein Topologie-Scan durchgeführt. Dabei detektiert das Kopplergerät zuerst folgende Komponenten:
- erster Gateway 606 (Hersteller X),
- Profibus-Feldgerät 607,
- zweiter Gateway 608 (Hersteller Y).

Es soll angenommen werden, dass das Kopplergerät 600 sowohl den ersten Gateway 606 (Hersteller X) als auch den zweiten Gateway 608 (Hersteller Y) unterstützt. Daher fordert das Kopplergerät 600 vom zweiten Gateway 608 weitere Informationen darüber an, welche weiteren Feldgeräte und Komponenten an den zweiten Gateway 608 angeschlossen sind. Der zweite Gateway 608 (Hersteller Y) antwortet, dass zwei HART-Feldgeräte 614 und 615 an den zweiten Gateway 608 angeschlossen sind.

Außerdem fordert das Kopplergerät 600 vom ersten Gateway 606 (Hersteller X) Informationen darüber an, welche Feldgeräte und Komponenten an den ersten Gateway 606 angeschlossen sind. Der erste Gateway 606 antwortet, dass ein CANopen-Feldgerät 610 sowie ein dritter Gateway 611 (Hersteller Z) an den ersten Gateway 606 angeschlossen sind.

Nachdem der dritte Gateway 611 (Hersteller Z) ebenfalls vom Kopplergerät 600 unterstützt wird, fordert das Kopplergerät 600 vom dritten Gateway 611 Informationen darüber an, welche weiteren Feldgeräte und Komponenten an den dritten Gateway 611 angeschlossen sind. Der dritte Gateway 611 antwortet, dass zwei Interbus-Feldgeräte 612 und 613 an den dritten Gateway 611 angeschlossen sind.

Das Kopplergerät 600 hat jetzt einen vollständigen Topologie-Scan des Feldbussystems 601 durchgeführt. Dabei wurden die folgenden sechs Feldgeräte entdeckt:
1) Profibus-Feldaerät 607
   Routing: Profibus -> Profibus-Feldgerät 607
2) HART-Feldaerät 614
   Routing: Profibus -> zweiter Gateway 608 -> HART-Feldgerät 614
3) HART-Feldaerät 615
   Routing: Profibus -> zweiter Gateway 608 -> HART-Feldgerät 615
4) CANopen-Feldaerät 610
   Routing: Profibus -> erster Gateway 606 -> CANopen-Feldgerät 610
5) Interbus-Feldaerät 612
   Routing: Profibus -> erster Gateway 606 -> dritter Gateway 611 -> Interbus-Feldgerät 612
6) Interbus-Feldaerät 613
   Routing: Profibus -> erster Gateway 606 -> dritter Gateway 611 -> Interbus-Feldgerät 613.

Auf Seiten des Kopplergeräts 600 ist jetzt eine vollständige Liste aller im Feldbussystem 601 vorhandenen Feldgeräte sowie der zugehörigen Routinginformation verfügbar.

Anfangs ist auf Seiten der Gerätezugriffssoftware 604 (also der FDT-Rahmenapplikation) lediglich der generische Kommunikationstreiber 616 installiert, der dem Kopplergerät 600 zugeordnet ist. Der generische Kommunikationstreiber 616 fragt zunächst vom Kopplergerät 600 eine Liste der auf Seiten des Feldbussystems 601 vorhandenen Feldgeräte ab. Wie oben dargestellt, hat das Kopplergerät 600 die Liste der Feldgeräte sowie die zugehörige Routinginformation bereits mittels eines Topologie-Scans ermittelt. Das Kopplergerät 600 übermittelt daher zum generischen Kommunikationstreiber 616 eine Liste mit folgenden sechs Feldgeräten:
- Profibus-Feldgerät 607,
- HART-Feldgerät 614,
- HART-Feldgerät 615,
- CANopen-Feldgerät 610,
- Interbus-Feldgerät 612 und
- Interbus-Feldgerät 613.

Nach Erhalt dieser Liste setzt der generische Kommunikationstreiber 616 insgesamt sechs Kommunikationskanäle für diese Feldgeräte auf, nämlich einen Profibus-Kommunikationskanal, zwei HART-Kommunikationskanäle, einen CANopen-Kommunikationskanal sowie zwei Interbus-Kommunikationskanäle.

Daraufhin wird für jeden dieser Kommunikationskanäle ein FDT-Scan durchgeführt, und daraufhin werden jeweils passende Geräte-DTMs für die verschiedenen Feldgeräte des Feldbussystems 601 instantiiert. Insbesondere wird für das Profibus-Feldgerät 607 ein geeigneter Geräte-DTM 617 für Profibus instantiiert. Für die beiden HART-Feldgeräte 614 und 615 werden jeweils passende Geräte-DTMs 618, 619 für HART instantiiert. Für das CANopen-Feldgerät 610 wird ein passender Geräte-DTM 620 für CANopen instantiiert. Und für die beiden Interbus-Feldgeräte 612, 613 werden jeweils passende Geräte-DTMs 621, 622 für Interbus instantiiert.

Nach der Instantiierung der sechs Geräte-DTMs 617 bis 622 ist die Kommunikationsstruktur vollständig. Die einzelnen Geräte-DTMs 617 bis 622 können jetzt jeweils Datenpakete über den generischen Kommunikationstreiber 616 und die Ethernet-Verbindung 602 zum Kopplergerät 600 schicken. Dort werden die Datenpakete des primären Datenverkehrs in den sekundären Datenverkehr umgesetzt, wobei Routinginformationen eingefügt werden, mit denen die Datenpakete zum Ziel-Feldgerät geroutet werden.

In umgekehrter Richtung können die Feldgeräte Datenpakete zum Kopplergerät 600 übermitteln, und diese Datenpakete werden dann über die Ethernet-Verbindung 602 zum generischen Kommunikationstreiber 616 übermittelt. Dieser setzt die Datenpakete in das für den jeweiligen Geräte-DTM benötigte Protokoll um und leitet die Datenpakete an den jeweiligen Geräte-DTM weiter.

## Patentansprüche

1. Datenübertragungssystem für einen Datenaustausch zwischen einem Feldbussystem (200, 601) mit einem ersten Feldbusprotokoll, das mindestens ein Feldgerät (203, 206, 207, 607, 610, 612-615) umfasst, und einer Gerätezugriffssoftware (210, 604), die auf einem Host (209, 603) installiert ist und mit der auf Komponenten des Feldbussystems (200, 601) zugegriffen werden kann, wobei das Datenübertragungssystem aufweist:
- ein Kopplergerät (205, 600), das an das Feldbussystem (200, 601) angeschlossen ist,
- einen generischen Kommunikationstreiber (213, 616), der in die Gerätezugriffssoftware (210, 604) eingebunden ist, wobei außerdem mindestens ein Gerätetreiber (214, 215, 617-622) in die Gerätezugriffssoftware (210, 604) eingebunden ist,
- eine zentrale Datenübertragungsstrecke, die zwischen dem generischen Kommunikationstreiber (213, 616) und dem Kopplergerät (205, 600) aufbaubar ist und über die ein primärer Datenverkehr (401) übertragbar ist,
wobei der generische Kommunikationstreiber (213, 616) dazu ausgelegt ist,
- mit mindestens einem der in die Gerätezugriffssoftware (210, 604) eingebundenen Gerätetreiber (214, 215, 617-622) Daten auszutauschen und von dem mindestens einen Gerätetreiber (214, 215, 617-622) empfangene Daten als Teil des primären Datenverkehrs (401) über die zentrale Datenübertragungsstrecke zum Kopplergerät (205, 600) zu übermitteln, und
- Daten des über die zentrale Datenübertragungsstrecke vom Kopplergerät (205, 600) empfangenen primären Datenverkehrs (401) jeweils an denjenigen Gerätetreiber (214, 215, 617-622) weiterzuleiten, für den die Daten bestimmt sind,
und wobei das Kopplergerät (205, 600) dazu ausgelegt ist,
- den vom generischen Kommunikationstreiber (213, 616) über die zentrale Datenübertragungsstrecke empfangenen primären Datenverkehr (401) unter Hinzufügung von Routinginformationen in einen sekundären Datenverkehr (402) umzusetzen und auf dem Feldbussystem (200, 601) zu senden, und
- von mindestens einem der Feldgeräte (203, 206, 207, 607, 610, 612-615) empfangene Daten in den primären Datenverkehr (401) umzusetzen und über die zentrale Datenübertragungsstrecke zum generischen Kommunikationstreiber (213, 616) zu übermitteln,
- ein Gateway (204), wobei das Feldbussystem (200, 601) das Gateway (204) umfasst, wobei an das Gateway (204) weitere Feldgeräte (206, 207) angeschlossen sind, welche über ein zweites Feldbusprotokoll mit dem Gateway (204) kommunizieren, wobei das Gateway (204) den sekundären Datenverkehr in das zweite Feldbusprotokoll umwandelt und an das weitere Feldgerät (206, 207) zuleitet, für welches der sekundäre Datenverkehr bestimmt ist, und
wobei für das Gateway (204) kein zugehöriger Gerätetreiber in der Gerätezugriffssoftware (210, 604) vorgesehen ist.

2. Datenübertragungssystem nach Anspruch 1, **gekennzeichnet durch** mindestens eines von folgenden:
- das Kopplergerät ist dazu ausgelegt, den vom generischen Kommunikationstreiber empfangenen primären Datenverkehr unter Hinzufügung von Routinginformationen in einen für das Routing zum jeweiligen Bestimmungsort innerhalb des Feldbussystems geeignet konfigurierten sekundären Datenverkehr umzusetzen;
- der sekundäre Datenverkehr ist vom Kopplergerät aus mittels der Routinginformationen zum jeweiligen Bestimmungsort innerhalb des Feldbussystems übertragbar.

3. Datenübertragungssystem nach einem der Ansprüche 1 oder 2, **gekennzeichnet durch** mindestens eines von folgenden:
- auf Seiten des Kopplergeräts sind Informationen zur Topologie des Feldbussystems vorhanden;
- das Kopplergerät ist dazu ausgelegt, Informationen zur Topologie des Feldbussystems und die vorhandenen Feldgeräte durch Analyse des Datenverkehrs auf dem Feldbus zu erfassen;
- das Kopplergerät ist dazu ausgelegt, die Routinginformation für den sekundären Datenverkehr unter Berücksichtigung der Topologie des Feldbussystems zu erzeugen;
- das Kopplergerät ist dazu ausgelegt, unter Verwendung von Informationen zur Topologie des Feldbussystems einen geeigneten Datenübertragungspfad für die Datenübertragung des sekundären Datenverkehrs vom Kopplergerät zum jeweiligen Bestimmungsort innerhalb des Feldbussystems zu bestimmen;
- das Kopplergerät ist dazu ausgelegt, unter Verwendung von Informationen zur Topologie des Feldbussystems einen geeigneten Datenübertragungspfad für die Datenübertragung des sekundären Datenverkehrs vom Kopplergerät zum jeweiligen Bestimmungsort innerhalb des Feldbussystems zu bestimmen und bei der Umsetzung des primären Datenverkehrs in den sekundären Datenverkehr geeignete Routinginformationen für das Routing über diesen Datenübertragungspfad hinzuzufügen.

4. Datenübertragungssystem nach einem der Ansprüche 1 bis 3, **gekennzeichnet durch** mindestens eines von folgenden:
- auf Seiten des Kopplergeräts sind Informationen zu Datenformaten von verschiedenen Typen von Gateways vorhanden;
- das Kopplergerät ist dazu ausgelegt zu bestimmen, über welche Gateways der sekundäre Datenverkehr auf einem Datenübertragungspfad vom Kopplergerät zum jeweiligen Bestimmungsort innerhalb des Feldbussystems geroutet werden soll, geeignete Routinginformationen für diese Gateways zu erzeugen und die Routinginformationen in Datenpakete des sekundären Datenverkehrs einzufügen;
- das Kopplergerät ist dazu ausgelegt zu bestimmen, über welche Gateways der sekundäre Datenverkehr auf einem Datenübertragungspfad vom Kopplergerät zum jeweiligen Bestimmungsort innerhalb des Feldbussystems geroutet werden soll, geeignete Routinginformationen für diese Gateways in dem von dem jeweiligen Gateway benötigten Datenformat zu erzeugen und die Routinginformationen in Datenpakete des sekundären Datenverkehrs einzufügen.

5. Datenübertragungssystem nach einem der Ansprüche 1 bis 4, **gekennzeichnet durch** mindestens eines von folgenden:
- der generische Kommunikationstreiber ist dazu ausgelegt, den vom Kopplergerät empfangenen primären Datenverkehr in das zum jeweiligen Gerätetreiber passende Feldbusprotokoll umzusetzen und an den jeweiligen Gerätetreiber weiterzuleiten;
- der generische Kommunikationstreiber umfasst mindestens einen Kommunikationskanal für den Datenaustausch mit mindestens einem der Gerätetreiber.

6. Datenübertragungssystem nach einem der Ansprüche 1 bis 5, **gekennzeichnet durch** mindestens eines von folgenden:
- die Gerätezugriffssoftware unterstützt den Standard FDT, und in die Gerätezugriffssoftware sind ein oder mehrere von Geräte-DTMs, Gateway-DTMs und Kommunikations-DTMs einbindbar;
- die Gerätezugriffssoftware unterstützt den Standard FDI, und in die Gerätezugriffssoftware sind Gerätetreiber bzw. Gerätebeschreibungsdateien in Form von FDI Device Packages einbindbar;
- die Gerätezugriffssoftware unterstützt den Standard DD, und in die Gerätezugriffssoftware sind Gerätetreiber bzw. Gerätebeschreibungsdateien des Standards DD einbindbar;
- die Gerätezugriffssoftware unterstützt den Standard EDD, und in die Gerätezugriffssoftware sind Gerätetreiber bzw. Gerätebeschreibungsdateien des Standards EDD einbindbar;
- die Gerätezugriffssoftware unterstützt den Standard EDS, und in die Gerätezugriffssoftware sind Gerätetreiber bzw. Gerätebeschreibungsdateien des Standards EDS einbindbar.

7. Datenübertragungssystem nach einem der Ansprüche 1 bis 6, **gekennzeichnet durch** mindestens eines von folgenden:
- das Kopplergerät ist auf der höchsten Ebene der Hierarchie des Feldbussystems angeordnet;
- das Kopplergerät ist zugleich als Feldzugangsgerät ausgebildet;
- das Kopplergerät ist zugleich als Feldzugangsgerät ausgebildet und erfüllt zusätzlich mindestens eine von folgenden Aufgaben: Durchführen einer Sicherheitsüberprüfung des gesamten primären Datenverkehrs, Überprüfen von Zugriffsberechtigungen für Zugriffe auf Komponenten des Feldbussystems.

8. Datenübertragungssystem nach einem der Ansprüche 1 bis 6, **gekennzeichnet durch** mindestens eines von folgenden:
- das Kopplergerät ist auf einer Hierarchieebene unterhalb der höchsten Hierarchieebene der Hierarchie des Feldbussystems angeordnet;
- das Kopplergerät ist lediglich in einem Teilsegment des Feldbussystems für das Routen von Daten zuständig.

9. System der Automatisierungstechnik, welches aufweist:
- ein Feldbussystem (200, 601) mit einer Mehrzahl von Feldgeräten (203, 206, 207, 607, 610, 612-615) sowie einem Gateway (204),
- einen mit dem Feldbussystem verbundenen Host (209, 603), auf dem eine Gerätezugriffssoftware (210, 604) mit einer Mehrzahl von den einzelnen Feldgeräten zugeordneten Gerätetreibern (214, 215, 617-622) installiert ist,
- ein Datenübertragungssystem nach einem der Ansprüche 1 bis 8, wobei der Datenaustausch zwischen der Gerätezugriffssoftware (210, 604) und dem Feldbussystem (200, 601) über das Kopplergerät (205, 600), den generischen Kommunikationstreiber (213, 616) und die zentrale Datenübertragungsstrecke erfolgt.

10. Ein Kopplergerät (205, 600) für ein Feldbussystem (200, 601) mit einem ersten Feldbusprotokoll, wobei das Feldbussystem (200, 601) mit einer auf einem Host (209, 603) installierten Gerätezugriffssoftware (210, 604) in Verbindung steht, mit der auf Komponenten des Feldbussystems (200, 601) zugegriffen werden kann, und wobei das Feldbussystem ein Gateway (204), umfasst, wobei an das Gateway (204) weitere Feldgeräte (206, 207) angeschlossen sind, welche über ein zweites Feldbusprotokoll mit dem Gateway (204) kommunizieren, wobei für das Gateway (204) kein zugehöriger Gerätetreiber in der Gerätezugriffssoftware (210, 604) vorgesehen ist,
wobei das Kopplergerät (205, 600) dazu ausgelegt ist, eine zentrale Datenübertragungsstrecke zu der Gerätezugriffssoftware (210, 604) zu unterhalten, über die ein primärer Datenverkehr (401) zwischen dem Kopplergerät (205, 600) und der Gerätezugriffssoftware (210, 604) übertragbar ist,
wobei das Kopplergerät (205, 600) dazu ausgelegt ist,
- Daten von einem Feldgerät (206, 207) des Feldbussystems (200, 601) zu empfangen, diese Daten in den primären Datenverkehr (401) umzusetzen und den so erzeugten primären Datenverkehr (401) über die zentrale Datenübertragungsstrecke zu der Gerätezugriffssoftware (210, 604) zu übermitteln, sowie
- über die zentrale Datenübertragungsstrecke den primären Datenverkehr (401) von der Gerätezugriffssoftware (210, 604) zu empfangen, den primären Datenverkehr (401) unter Hinzufügung von Routinginformationen in einen sekundären Datenverkehr (402) derart umzusetzen und den so erzeugten sekundären Datenverkehr (402) auf dem Feldbussystem (200, 601) derart zu senden, dass das Gateway (204) den sekundären Datenverkehr in das zweite Feldbusprotokoll umwandelt und an das weitere Feldgerät (206, 207) zuleitet, für welches der sekundäre Datenverkehr bestimmt ist.

11. Kopplergerät nach Anspruch 10, **gekennzeichnet durch** mindestens eines von folgenden:
- das Kopplergerät ist dazu ausgelegt, den von der Gerätezugriffssoftware empfangenen primären Datenverkehr unter Hinzufügung von Routinginformationen in einen für das Routing zum jeweiligen Bestimmungsort innerhalb des Feldbussystems geeignet konfigurierten sekundären Datenverkehr umzusetzen;
- der sekundäre Datenverkehr ist vom Kopplergerät aus mittels der Routinginformationen zum jeweiligen Bestimmungsort innerhalb des Feldbussystems übertragbar.

12. Generischer Kommunikationstreiber (213, 616) für eine Gerätezugriffssoftware (210, 604), die auf einem Host (209, 603) installiert ist und mit der auf Komponenten eines Feldbussystems (200, 601) zugegriffen werden kann,
wobei der generische Kommunikationstreiber (213, 616) einem Kopplergerät (205, 600) nach Anspruch 10 oder 11 zugeordnet ist, das an das Feldbussystem (200, 601) angeschlossen ist, wobei der generische Kommunikationstreiber (213, 616) dazu ausgelegt ist, eine zentrale Datenübertragungsstrecke zu dem Kopplergerät (205, 600) zu unterhalten, über die ein primärer Datenverkehr (401) zwischen dem generischen Kommunikationstreiber (213, 616) und dem Kopplergerät (205, 600) übertragbar ist,
wobei der generische Kommunikationstreiber (213, 616) dazu ausgelegt ist,
- Daten von einem der Gerätetreiber (214, 215, 617-622) zu empfangen und die empfangenen Daten im Rahmen des primären Datenverkehrs (401) über die zentrale Datenübertragungsstrecke zu dem Kopplergerät (205, 600) zu übertragen,
- von dem Kopplergerät (205, 600) über die zentrale Datenübertragungsstrecke im Rahmen des primären Datenverkehrs (401) Daten zu empfangen und die vom Kopplergerät (205, 600) empfangenen Daten zu demjenigen Gerätetreiber (214, 215, 617-622) weiterzuleiten, für den die Daten bestimmt sind.

13. Verfahren zum Datenaustausch zwischen einem Feldbussystem (200, 601), das mindestens ein Feldgerät (203, 206, 207, 607, 610, 612-615) umfasst und ein erstes Feldbusprotokoll aufweist, und einer Gerätezugriffssoftware (210, 604), die auf einem Host (209, 603) installiert ist und mit der auf Komponenten des Feldbussystems (200, 601) zugegriffen werden kann, mittels:
- eines Kopplergeräts (205, 600), das an das Feldbussystem (200, 601) angeschlossen ist,
- eines generischen Kommunikationstreibers (213, 616), der in eine Gerätezugriffssoftware (210, 604) eingebunden ist, wobei in die Gerätezugriffssoftware (210, 604) außerdem mindestens ein Gerätetreiber (214, 215, 617-622) eingebunden ist, wobei der mindestens eine Gerätetreiber (214, 215, 617-622) jeweils einem Feldgerät (203, 206, 207, 607, 610, 612-615) des Feldbussystems (200, 601) zugeordnet ist,
- einer zentralen Datenübertragungsstrecke, die zwischen dem Kopplergerät (205, 600) und dem generischen Kommunikationstreiber (213, 616) aufbaubar ist und über die ein primärer Datenverkehr zwischen dem Kopplergerät (205, 600) und dem generischen Kommunikationstreiber (213, 616) übertragbar ist,
- eines Gateways (204), wobei das Feldbussystem (200, 601) das Gateway (204) umfasst, wobei an das Gateway (204) weitere Feldgeräte (206, 207) angeschlossen sind, welche über ein zweites Feldbusprotokoll mit dem Gateway (204) kommunizieren, und wobei für das Gateway (204) kein zugehöriger Gerätetreiber in der Gerätezugriffssoftware (210, 604) vorgesehen ist.
wobei das Verfahren folgende Schritte umfasst:
- auf Seiten der Gerätezugriffssoftware (210, 604), Austauschen von Daten zwischen dem generischen Kommunikationstreiber (213, 616) und mindestens einem der Gerätetreiber (214, 215, 617-622),
- Austauschen von Daten als Teil des primären Datenverkehrs (401) über die zentrale Datenübertragungsstrecke zwischen dem generischen Kommunikationstreiber (213, 616) und dem Kopplergerät (205, 600),
- auf Seiten des Kopplergeräts (205, 600), Umsetzen des vom Kopplergerät (205, 600) empfangenen primären Datenverkehrs (401) unter Hinzufügung von Routinginformation in einen sekundären Datenverkehr (402), Senden des sekundären Datenverkehrs (402) auf dem Feldbussystem (200, 601), Umwandeln des sekundären Datenverkehr in das zweite Feldbusprotokoll mittels des Gateways und Zueiten an das weitere Feldgerät (206, 207), für welches der sekundäre Datenverkehr bestimmt ist und Umsetzen der von mindestens einem der Feldgeräte (203, 206, 207, 607, 610, 612-615) empfangenen Daten in einen primären Datenverkehr (401) und Senden des primären Datenverkehrs (401) über die zentrale Datenübertragungsstrecke zum generischen Kommunikationstreiber (213, 616).

14. Verfahren nach Anspruch 13, **gekennzeichnet durch** folgende Schritte:
- Übermitteln von Daten von einem der Gerätetreiber zum generischen Kommunikationstreiber,
- Übertragen der von einem der Gerätetreiber empfangenen Daten als Teil des primären Datenverkehrs vom generischen Kommunikationstreiber über die zentrale Datenübertragungsstrecke zum Kopplergerät,
- auf Seiten des Kopplergeräts, Umsetzen des vom generischen Kommunikationstreiber empfangenen primären Datenverkehrs unter Hinzufügung von Routinginformationen in einen sekundären Datenverkehr, und Senden des sekundären Datenverkehrs auf dem Feldbussystem.

15. Verfahren nach Anspruch 13 oder Anspruch 14, **gekennzeichnet durch** folgende Schritte:
- Übertragen von Daten von einem der Feldgeräte zu dem Kopplergerät,
- Übertragen der empfangenen Daten als Teil des primären Datenverkehrs vom Kopplergerät über die zentrale Datenübertragungsstrecke zum generischen Kommunikationstreiber,
- auf Seiten des generischen Kommunikationstreibers, Weiterleiten der vom Kopplergerät empfangenen Daten an denjenigen Gerätetreiber, für den die Daten bestimmt sind.

## Claims

1. Data transmission system designed for the exchange of data between a fieldbus system (200, 601) with a first fieldbus protocol, which comprises at least a field device (203, 206, 207, 607, 610, 612-615), and a device access software (210, 604), which is installed on a host (209, 603) and which enables access to components of the fieldbus system (200, 601), wherein the data transmission system has:
- a coupling device (205, 600), which is connected to the fieldbus system (200, 601)
- a generic communication driver (213, 616), which is integrated into the device access software (210, 604), wherein at least one device driver (214, 215, 617-622) is also integrated into the device access software (210, 604),
- a central data transmission path, which can be established between the generic communication driver (213, 616) and the coupling device (205, 600) and by means of which primary data traffic (401) can be transmitted,
wherein the generic communication driver (213, 616) is designed to
- exchange data with at least one of the device drivers (214, 215, 617-622) integrated into the device access software (210, 604) and to transmit the data received from the at least one device driver (214, 215, 617-622) to the coupling device (205, 600) as part of the primary data traffic (401) via the central data transmission path, and to
- forward data of the primary data traffic (401), received from the coupling device (205, 600) via the central data transmission path, to the specific device driver (214, 215, 617-622) for which the data are destined,
and wherein the coupling device (205, 600) is designed to
- convert the primary data traffic (401) received from the generic communication driver (213, 616) via the central data transmission path into secondary data traffic, by adding routing information and to transmit the data on the fieldbus system (200, 601), and to
- convert the data received from at least one of the field devices (203, 206, 207, 607, 610, 612-615) into primary data traffic (401) and to transmit the data to the generic communication driver (213, 616) via the central data transmission path,
- a gateway (204), wherein the fieldbus system (200, 601) comprises the gateway (204),wherein additional field devices (206, 207) are connected to the gateway (204), which communicate with the gateway (204) via a second fieldbus protocol, wherein the gateway (204) converts the secondary data traffic into the second fieldbus protocol and supplies it to the additional field device (206, 207) for which the secondary data traffic is destined, and
wherein no associated device driver is provided for the gateway (204) in the device access software (210, 604).

2. Data transmission system as claimed in Claim 1, **characterized by** at least one of the following:
- the coupling device is designed to convert the primary data traffic received from the generic communication driver into secondary data traffic suitably configured for routing to the specific destination in the fieldbus system by adding routing information;
- the secondary data traffic can be transmitted from the coupling device to the specific destination within the fieldbus system using the routing information.

3. Data transmission system as claimed in one of the Claims 1 or 2, **characterized by** at least one of the following:
- information on the topology of the fieldbus system is available on the side of the coupling device;
- the coupling device is designed to collect information about the topology of the fieldbus system and the existing field devices by analyzing the data traffic on the fieldbus;
- the coupling device is designed to generate routing information for the secondary data traffic taking the topology of the fieldbus system into account;
- the coupling device is designed to determine, using the information regarding the topology of the fieldbus system, a suitable data transmission path for the data transmission of the secondary data traffic from the coupling device to the specific destination within the fieldbus system;
- the coupling device is designed to determine, using the information regarding the topology of the fieldbus system, a suitable data transmission path for the data transmission of the secondary data traffic from the coupling device to the specific destination within the fieldbus system and to add routing information suitable for routing via this data transmission path when converting the primary data traffic into the secondary data traffic.

4. Data transmission system as claimed in one of the Claims 1 to 3, **characterized by** at least one of the following:
- information regarding the data formats of various types of gateways is available on the coupling device side;
- the coupling device is designed to determine the gateways via which the secondary data traffic should be routed on a data transmission path from the coupling device to the specific destination within the fieldbus system, to generate suitable routing information for these gateways and to insert routing information into data packages of the secondary data traffic;
- the coupling device is designed to determine the gateways via which the secondary data traffic should be routed on a data transmission path from the coupling device to the specific destination within the fieldbus system, to generate suitable routing information for these gateways in the data format required by the specific gateway and to insert the routing information into data packages of the secondary data traffic.

5. Data transmission system as claimed in one of the Claims 1 to 4, **characterized by** at least of the following:
- the generic communication driver is designed to convert the primary data traffic received from the coupling device into the fieldbus protocol suitable for the specific device driver, and to forward it to the specific device driver;
- the generic communication driver comprises at least one communication channel for the exchange of data with at least one of the device drivers.

6. Data transmission system as claimed in one of the Claims 1 to 5, **characterized by** at least of the following:
- the device access software supports the FDT standard and one or more device DTMs, gateway DTMs and communication DTMs can be integrated into the device access software;
- the device access software supports the FDI standard and device drivers or device description files can be integrated into the device access software in the form of FDI Device Packages;
- the device access software supports the DD standard and device drivers or device description files of the DD standard can be integrated into the device access software;
- the device access software supports the EDD standard and device drivers or device description files of the EDD standard can be integrated into the device access software;
- the device access software supports the EDS standard and device drivers or device description files of the EDS standard can be integrated into the device access software.

7. Data transmission system as claimed in one of the Claims 1 to 6, **characterized by** at least of the following:
- the coupling device is arranged at the highest level of the hierarchy of the fieldbus system;
- the coupling device is simultaneously designed as a field access device;
- the coupling device is simultaneously designed as a field access device and additionally performs at least one of the following tasks: execution of a security check on the entire the primary data traffic, verification of access authorizations for access to components of the fieldbus system.

8. Data transmission system as claimed in one of the Claims 1 to 6, **characterized by** at least of the following characteristics:
- the coupling device is arranged at a hierarchical level located below the highest hierarchical level of the fieldbus system;
- the coupling device is only responsible for the routing of data in a subsegment of the fieldbus system.

9. System used in automation engineering, said system comprising:
- a fieldbus system (200, 601) with multiple field devices (203, 206, 207, 607, 610, 612-615), as well as a gateway (204),
- a host (209, 603) connected to the fieldbus system, on which a device access software (210, 604) is installed with a multitude of device drivers (214, 215, 617-622) assigned to the different field devices,
- a data transmission system as claimed in one of the Claims 1 to 8, wherein the exchange of data between the device access software (210, 604) and the fieldbus system (200, 601) is implemented by means of the coupling device (205, 600), the generic communication driver (213, 616) and the central data transmission path.

10. A coupling device (205, 600) for a fieldbus system (200, 601) with a first fieldbus protocol, wherein the fieldbus system (200, 601) is connected to a device access software (210, 604) installed on a host (209, 603), said software permitting access to the components of the fieldbus system (200, 601), and wherein the fieldbus system comprises a gateway (204), wherein additional field devices (206, 207) are connected to the gateway (204), said devices communicating with the gateway (204) via a second fieldbus protocol, wherein no associated device driver is provided in the device access software (210, 604) for the gateway,
wherein the coupling device (205, 600) is designed to maintain a central data transmission path to the device access software (210, 604), via said path primary data traffic (401) can be transmitted between the coupling device (205, 600) and the device access software (210, 604),
wherein the coupling device (205, 600) is designed to:
- receive data from a field device (206, 207) of the fieldbus system (200, 601), convert these data into primary data traffic (401) and transmit the primary data traffic (401) generated in this way to the device access software (210, 604) via the central data transmission path, and to
- receive, via the central data transmission path, the primary data traffic (401) from the device access software (210, 604), to convert the primary data traffic (401) into secondary data traffic (402) by adding routing information and to transmit the secondary data traffic (402) generated in this way on the fieldbus system (200, 601) in such a way that the gateway (204) converts the secondary data traffic into the second fieldbus protocol and forwards it to the additional field device (206, 207) for which the secondary data traffic is destined.

11. Coupling device as claimed in Claim 10, **characterized by** at least one of the following:
- the coupling device is designed to convert, by adding routing information, the primary data traffic received from the device access software into secondary data traffic that is suitably configured for routing to the specific destination within the fieldbus system;
- the secondary data traffic can be transmitted from the coupling device to the specific destination within the fieldbus system by means of the routing information.

12. Generic communication driver (213, 616) for a device access software (210, 604), which is installed on a host (209, 603) and with which it is possible to access components of a fieldbus system (200, 601),
wherein the generic communication driver (213, 616) is assigned to a coupling device (205, 600) as claimed in Claim 10 or 11, said device being connected to the fieldbus system (200, 601), wherein the generic communication driver (213, 616) is designed to maintain a central data transmission path to the coupling device (205, 600) by means of which primary data traffic (401) can be transmitted between the generic communication driver (213, 616) and the coupling device (205, 600), wherein the generic communication driver (213, 616) is designed in such a way to
- receive data from one of the device drivers (214, 215, 617-622) and to transmit the received data to the coupling device (205, 600) as part of the primary data traffic (401) via the central data transmission path,
- receive data from the coupling device (205, 600) via the central data transmission path as part of the primary data traffic (401) and to forward the data received from the coupling device (205, 600) to the device driver (214, 215, 617-622) for which the data are destined.

13. Procedure for the exchange of data between a fieldbus system (200, 601), which comprises at least one field device (203, 206, 207, 607, 610, 612-615) and has a first fieldbus protocol, and a device access software (210, 604), which is installed on a host (209, 603) and with which it is possible to access components of the fieldbus system (200, 601) by means of the following elements:
- a coupling device (205, 600) that is connected to the fieldbus system (200, 601),
- a generic communication driver (213, 616), which is integrated in a device access software (210, 604), wherein at least one device driver (214, 215, 617-622) is also integrated in the device access software, wherein the at least one device driver (214, 215, 617-622) is assigned to a field device (203, 206, 207, 607, 610, 612-615) of the fieldbus system (200, 601),
- a central data transmission path, which can be established between the coupling device (205, 600) and the generic communication driver (213, 616) and by means of which primary data traffic (401) can be transmitted between the coupling device (205, 600) and the generic communication driver (213, 616),
- a gateway (204), wherein the fieldbus system (200, 601) comprises the gateway (204), wherein additional field devices (206, 207) are connected to the gateway (204), which communicate with the gateway (204) via a second fieldbus protocol, and wherein no associated device driver is provided for the gateway (204) in the device access software (210, 604),
wherein the procedure comprises the following steps:
- on the device access software side (210, 604), the exchange of data between the generic communication driver (213, 616) and at least one of the device drivers (214, 215, 617-622),
- exchange of data as part of the primary data traffic (401) via the central data transmission path between the generic communication driver (213, 616) and the coupling device (205, 600),
- on the coupling device side (205, 600), conversion of the primary data traffic (401) received by the coupling device (205, 600), with the addition of routing information, into secondary data traffic (402), transmission of the secondary data traffic (402) on the fieldbus system (200, 601), conversion of the secondary data traffic into the second fieldbus protocol by means of the gateway and forwarding to the additional field device (206, 207) for which the secondary data traffic is destined and conversion of the data received from at least one of the field devices (203, 206, 207, 607, 610, 612-615) into primary data traffic (401) and transmission of the primary data traffic (401) to the generic communication driver (213, 616) via la central data transmission path.

14. Procedure as claimed in Claim 13, **characterized by** the following steps:
- Transmission of data from one of the device drivers to the generic communication driver,
- Transmission of the data received from one of the device drivers as part of the primary data traffic from the generic communication driver to the coupling device via the central data transmission path,
- on the side of the coupling device, conversion of the primary data traffic received from the generic communication driver into secondary data traffic by adding routing information, and transmission of the secondary data traffic on the fieldbus system.

15. Procedure as claimed in Claim 13 or Claim 14, **characterized by** the following steps:
- Transmission of the data from one of the field devices to the coupling device,
- Transmission of the data received by the coupling device to the generic communication driver as part of primary data traffic via the central data transmission path,
- on the side of the generic communication driver, forwarding of the data received from the coupling device to the device driver for which the data are destined.

## Revendications

1. Système de transmission de données destiné à l'échange de données entre un système de bus de terrain (200, 601) avec un premier protocole de bus de terrain, qui comprend au moins un appareil de terrain (203, 206, 207, 607, 610, 612-615), et un logiciel d'accès aux appareils (210, 604), lequel est installé sur un hôte (209, 603) et lequel permet d'accéder aux composants du système de bus de terrain (200, 601), le système de transmission de données présentant :
- un dispositif de couplage (205, 600), lequel est raccordé au système de bus de terrain (200, 601)
- un pilote de communication générique (213, 616), lequel est intégré dans le logiciel d'accès aux appareils (210, 604), au moins un pilote d'appareil (214, 215, 617-622) étant par ailleurs intégré dans le logiciel d'accès aux appareils (210, 604),
- une voie centrale de transmission de données, laquelle peut être établie entre le pilote de communication générique (213, 616) et le dispositif de couplage (205, 600) et par l'intermédiaire de laquelle un trafic de données primaire (401) peut être transmis,
le pilote de communication générique (213, 616) étant conçu de telle sorte à
- échanger des données avec au moins l'un des pilotes d'appareil (214, 215, 617-622) intégrés dans le logiciel d'accès aux appareils (210, 604) et à transmettre au dispositif de couplage (205, 600) les données reçues de l'au moins un pilote d'appareil (214, 215, 617-622) en tant qu'élément du trafic de données primaire (401) via la voie centrale de transmission de données, et à
- retransmettre les données du trafic de données primaire (401), reçues par le dispositif de couplage (205, 600) via la voie centrale de transmission de données, respectivement au pilote d'appareil (214, 215, 617-622), auquel les données sont destinées,
et le dispositif de couplage (205, 600) étant conçu de telle sorte à
- convertir le trafic de données primaire (401) du pilote de communication générique (213, 616) reçu via la voie centrale de transmission de données, avec l'ajout d'informations de routage, en un trafic de données secondaire (402) et à le transmettre sur le système de bus de terrain (200, 601), et à
- convertir les données reçues d'au moins un appareil de terrain (203, 206, 207, 607, 610, 612-615) en trafic de données primaire (401) et à les transmettre au pilote de communication générique (213, 616) via la voie centrale de transmission de données,
- une passerelle (204), le système de bus de terrain (200, 601) comprenant la passerelle (204),
des appareils de terrain (206, 207) supplémentaires étant connectés à la passerelle (204), lesquels communiquent avec la passerelle (204) via un deuxième protocole de bus de terrain,
la passerelle (204) convertissant le trafic de données secondaire en le deuxième protocole de bus de terrain et l'acheminant à l'appareil de terrain (206, 207) supplémentaire, auquel le trafic de données secondaire est destiné, et
aucun pilote d'appareil associé n'étant prévu pour la passerelle (204) dans le logiciel d'accès aux appareils (210, 604).

2. Système de transmission de données selon la revendication 1, **caractérisé par** au moins l'une des caractéristiques suivantes :
- le dispositif de couplage est conçu de telle sorte à convertir le trafic de données primaire reçu par le pilote de communication générique, avec l'ajout d'informations de routage, en un trafic de données secondaire configuré de façon appropriée pour le routage vers le lieu de destination respectif au sein du système de bus de terrain ;
- le trafic de données secondaire peut être transmis à partir du dispositif de couplage au moyen des informations de routage vers le lieu de destination respectif au sein du système de bus de terrain.

3. Système de transmission de données selon l'une des revendications 1 ou 2, **caractérisé par** au moins l'une des caractéristiques suivantes :
- du côté du dispositif de couplage, des informations sur la topologie du système de bus de terrain sont disponibles ;
- le dispositif de couplage est conçu de telle sorte à saisir des informations sur la topologie du système de bus de terrain et les appareils de terrain présents en analysant le trafic de données sur le bus de terrain ;
- le dispositif de couplage est conçu de telle sorte à générer les informations de routage pour le trafic de données secondaire en tenant compte de la topologie du système de bus de terrain ;
- le dispositif de couplage est conçu de telle sorte à déterminer, en utilisant des informations sur la topologie du système de bus de terrain, un trajet de transmission de données approprié pour la transmission des données du trafic de données secondaire à partir du dispositif de couplage vers le lieu de destination respectif au sein du système de bus de terrain ;
- le dispositif de couplage est conçu de telle sorte à déterminer, en utilisant des informations sur la topologie du système de bus de terrain, un trajet de transmission de données approprié pour la transmission des données du trafic de données secondaire à partir du dispositif de couplage vers le lieu de destination respectif au sein du système de bus de terrain et, lors de la conversion du trafic de données primaire en le trafic de données secondaire, à ajouter des informations de routage appropriées pour le routage via ce trajet de transmission de données.

4. Système de transmission de données selon l'une des revendications 1 à 3, **caractérisé par** au moins l'une des caractéristiques suivantes :
- du côté du dispositif de couplage, des informations sur les formats de données de différents types de passerelles sont disponibles ;
- le dispositif de couplage est conçu de telle sorte à déterminer les passerelles via lesquelles le trafic de données secondaire doit être routé sur un trajet de transmission de données du dispositif de couplage vers le lieu de destination respectif au sein du système de bus de terrain, à générer des informations de routage appropriées pour ces passerelles et à insérer les informations de routage dans des paquets de données du trafic de données secondaire ;
- le dispositif de couplage est conçu de telle sorte à déterminer les passerelles via lesquelles le trafic de données secondaire doit être routé sur un trajet de transmission de données du dispositif de couplage vers le lieu de destination respectif au sein du système de bus de terrain, à générer des informations de routage appropriées pour ces passerelles dans le format de données requis par la passerelle respective, et à insérer les informations de routage dans des paquets de données du trafic de données secondaire.

5. Système de transmission de données selon l'une des revendications 1 à 4, **caractérisé par** au moins l'une des caractéristiques suivantes :
- le pilote de communication générique est conçu de telle sorte à convertir le trafic de données primaire reçu par le dispositif de couplage en le protocole de bus de terrain adapté au pilote d'appareil respectif, et à le retransmettre au pilote d'appareil respectif ;
- le pilote de communication générique comprend au moins un canal de communication pour l'échange de données avec au moins l'un des pilotes d'appareil.

6. Système de transmission de données selon l'une des revendications 1 à 5, **caractérisé par** au moins l'une des caractéristiques suivantes :
- le logiciel d'accès aux appareils prend en charge le standard FDT et un ou plusieurs DTM d'appareil, DTM de passerelle et DTM de communication peut/peuvent être intégré(s) dans le logiciel d'accès aux appareils ;
- le logiciel d'accès aux appareils prend en charge le standard FDI et des pilotes d'appareil ou des fichiers de description d'appareil sous la forme de FDI Device Packages peuvent être intégrés dans le logiciel d'accès aux appareils ;
- le logiciel d'accès aux appareils prend en charge le standard DD et des pilotes d'appareil ou des fichiers de description d'appareil du standard DD peuvent être intégrés dans le logiciel d'accès aux appareils ;
- le logiciel d'accès aux appareils prend en charge le standard EDD et des pilotes d'appareil ou des fichiers de description d'appareil du standard EDD peuvent être intégrés dans le logiciel d'accès aux appareils ;
- le logiciel d'accès aux appareils prend en charge le standard EDS et des pilotes d'appareil ou des fichiers de description d'appareil du standard EDS peuvent être intégrés dans le logiciel d'accès aux appareils.

7. Système de transmission de données selon l'une des revendications 1 à 6, **caractérisé par** au moins l'une des caractéristiques suivantes :
- le dispositif de couplage est disposé sur le niveau le plus élevé de la hiérarchie du système de bus de terrain ;
- le dispositif de couplage est simultanément conçu en tant qu'appareil d'accès de terrain ;
- le dispositif de couplage est simultanément conçu en tant qu'appareil d'accès de terrain et effectue en plus au moins l'une des tâches suivantes : réalisation d'une vérification de sécurité de l'ensemble du trafic de données primaire, vérification des autorisations d'accès pour les accès aux composants du système de bus de terrain.

8. Système de transmission de données selon l'une des revendications 1 à 6, **caractérisé par** au moins l'une des caractéristiques suivantes :
- le dispositif de couplage est disposé sur un niveau hiérarchique situé au-dessous du niveau supérieur de la hiérarchie du système de bus de terrain ;
- le dispositif de couplage est chargé du routage des données uniquement dans un segment partiel du système de bus de terrain.

9. Système de la technique d'automatisation, lequel comprend :
- un système de bus de terrain (200, 601) avec plusieurs appareils de terrain (203, 206, 207, 607, 610, 612-615), ainsi qu'une passerelle (204),
- un hôte (209, 603) relié avec le système de bus de terrain, sur lequel est installé un logiciel d'accès aux appareils (210, 604) avec plusieurs pilotes d'appareil (214, 215, 617-622) associés aux différents appareils de terrain,
- un système de transmission de données selon l'une des revendications 1 à 8, l'échange de données entre le logiciel d'accès aux appareils (210, 604) et le système de bus de terrain (200, 601) étant réalisé par l'intermédiaire du dispositif de couplage (205, 600), le pilote de communication générique (213, 616) et la voie centrale de transmission de données.

10. Dispositif de couplage (205, 600) destiné à un système de bus de terrain (200, 601) avec un premier protocole de bus de terrain, le système de bus de terrain (200, 601) étant en liaison avec un logiciel d'accès aux appareils (210, 604) installé sur un hôte (209, 603), lequel logiciel permet d'accéder à des composants du système de bus de terrain (200, 601), et le système de bus de terrain comprenant une passerelle (204), des appareils de terrain (206, 207) supplémentaires étant raccordés à la passerelle (204), lesquels appareils communiquent via un deuxième protocole de bus de terrain avec la passerelle (204), aucun pilote d'appareil associé n'étant prévu dans le logiciel d'accès aux appareils (210, 604),
le dispositif de couplage (205, 600) étant conçu de telle sorte à maintenir une voie centrale de transmission de données vers le logiciel d'accès aux appareils (210, 604), voie par l'intermédiaire de laquelle un trafic de données primaire (401) peut être transmis entre le dispositif de couplage (205, 600) et le logiciel d'accès aux appareils (210, 604),
le dispositif de couplage (205, 600) étant conçu de telle sorte à
- recevoir les données d'un appareil de terrain (206, 207) du système de bus de terrain (200, 601), à convertir ces données en le trafic de données primaire (401) et à transmettre au logiciel d'accès aux appareils (210, 604) le trafic de données primaire (401) ainsi généré via la voie centrale de transmission des données, ainsi qu'à
- recevoir, via la voie centrale de transmission des données, le trafic de données primaire (401) en provenance du logiciel d'accès aux appareils (210, 604), à convertir le trafic de données primaire (401), avec l'ajout d'informations de routage, en un trafic de données secondaire (402) et à transmettre le trafic de données secondaire (402) ainsi généré sur le système de bus de terrain (200, 601) de telle sorte que la passerelle (204) convertit le trafic de données secondaire en le deuxième protocole de bus de terrain et l'achemine à l'appareil de terrain (206, 207) supplémentaire, auquel le trafic de données secondaire est destiné.

11. Dispositif de couplage selon la revendication 10, **caractérisé par** au moins l'une des caractéristiques suivantes :
- le dispositif de couplage est conçu de telle sorte à convertir le trafic de données primaire reçu par le logiciel d'accès aux appareils, avec l'ajout d'informations de routage, en un trafic de données secondaire configuré de façon appropriée pour le routage vers le lieu de destination respectif au sein du système de bus de terrain ;
- le trafic de données secondaire peut être transmis à partir du dispositif de couplage au moyen des informations de routage vers le lieu de destination respectif au sein du système de bus de terrain.

12. Pilote de communication générique (213, 616) destiné à un logiciel d'accès aux appareils (210, 604), lequel est installé sur un hôte (209, 603) et lequel permet d'accéder à des composants d'un système de bus de terrain (200, 601),
le pilote de communication générique (213, 616) étant attribué à un dispositif de couplage (205, 600) selon la revendication 10 ou 11, lequel dispositif est raccordé au système de bus de terrain (200, 601), le pilote de communication générique (213, 616) étant conçu de telle sorte à maintenir une voie centrale de transmission de données vers le dispositif de couplage (205, 600), par l'intermédiaire de laquelle un trafic de données primaire (401) entre le pilote de communication générique (213, 616) et le dispositif de couplage (205, 600) peut être transmis, le pilote de communication générique (213, 616) étant conçu de telle sorte à
- recevoir les données provenant d'un pilote d'appareil (214, 215, 617-622) et à transmettre au dispositif de couplage (205, 600) les données reçues dans le cadre du trafic de données primaire (401) via la voie centrale de transmission de données,
- recevoir les données provenant du dispositif de couplage (205, 600) via la voie centrale de transmission de données dans le cadre du trafic de données primaire (401) et à retransmettre les données reçues du dispositif de couplage (205, 600) au pilote d'appareil (214, 215, 617-622), auquel les données sont destinées.

13. Procédé destiné à l'échange de données entre un système de bus de terrain (200, 601), qui comprend au moins un appareil de terrain (203, 206, 207, 607, 610, 612-615) et présente un premier protocole de bus de terrain, et un logiciel d'accès aux appareils (210, 604), lequel est installé sur un hôte (209, 603) et lequel permet d'accéder à des composants du système de bus de terrain (200, 601) au moyen des éléments suivants :
- un dispositif de couplage (205, 600), lequel est raccordé au système de bus de terrain (200, 601),
- un pilote de communication générique (213, 616), lequel est intégré dans un logiciel d'accès aux appareils (210, 604), au moins un pilote d'appareil (214, 215, 617-622) étant intégré dans le logiciel d'accès aux appareils, l'au moins un pilote d'appareil (214, 215, 617-622) étant attribué respectivement à un appareil de terrain (203, 206, 207, 607, 610, 612-615) du système de bus de terrain (200, 601),
- une voie centrale de transmission de données, laquelle peut être établie entre le dispositif de couplage (205, 600) et le pilote de communication générique (213, 616), et voie par l'intermédiaire de laquelle un trafic de données primaire peut être transmis entre le dispositif de couplage (205, 600) et le pilote de communication générique (213, 616),
- une passerelle (204), le système de bus de terrain (200, 601) comprenant la passerelle (204), des appareils de terrain (206, 207) supplémentaires étant raccordés à la passerelle (204), lesquels appareils communiquent via un deuxième protocole de bus de terrain avec la passerelle (204), et aucun pilote d'appareil associé n'étant prévu pour la passerelle (204) dans le logiciel d'accès aux appareils (210, 604),
lequel procédé comprend les étapes suivantes :
- du côté du logiciel d'accès aux appareils (210, 604), échange de données entre le pilote de communication générique (213, 616) et au moins l'un des pilotes d'appareil (214, 215, 617-622),
- échange de données en tant qu'élément du trafic de données primaire (401) via la voie centrale de transmission de données entre le pilote de communication générique (213, 616) et le dispositif de couplage (205, 600),
- du côté du dispositif de couplage (205, 600), conversion du trafic de données primaire (401) reçu du dispositif de couplage (205, 600), avec l'ajout d'informations de routage, en un trafic de données secondaire (402), transmission du trafic de données secondaire (402) sur le système de bus de terrain (200, 601), conversion du trafic de données secondaire en le deuxième protocole de bus de terrain au moyen de la passerelle et acheminement à l'appareil de terrain (206, 207) supplémentaire, auquel le trafic de données secondaire est destiné et conversion des données reçues par au moins l'un des appareils de terrain (203, 206, 207, 607, 610, 612-615) en un trafic de données primaire (401) et transmission au pilote de communication générique (213, 616) du trafic de données primaire (401) via la voie centrale de transmission de données.

14. Procédé selon la revendication 13, **caractérisé par** les étapes suivantes :
- Transmission de données entre l'un des pilotes d'appareil et le pilote de communication générique,
- Transmission des données reçues par l'un des pilotes d'appareil en tant qu'élément du trafic de données primaire entre le pilote de communication générique et le dispositif de couplage via la voie centrale de transmission de données,
- du côté du dispositif de couplage, conversion du trafic de données primaire reçu par le pilote de communication générique, avec l'ajout d'informations de routage, en un trafic de données secondaire, et transmission du trafic de données secondaire sur le système de bus de terrain.

15. Procédé selon la revendication 13 ou la revendication 14, **caractérisé par** les étapes suivantes :
- Transmission de données entre l'un des appareils de terrain et le dispositif de couplage,
- Transmission des données reçues en tant qu'élément du trafic de données primaire par le dispositif de couplage au pilote de communication générique via la voie centrale de transmission de données,
- du côté du pilote de communication générique, retransmission des données reçues par le dispositif de couplage au pilote d'appareil, auquel les données sont destinées.
